# EUROPEAN PATENT SPECIFICATION

(11) **EP 3 695 962 B1**
(45) Date of publication and mention of the grant of the patent: **27.04.2022**
(21) Application number: 19157385.6
(22) Date of filing: 15.02.2019
(51) Int. Cl.: B32B 7/12, B32B 21/04, B32B 21/13, B32B 21/14, B32B 7/03, C09D 197/00

(54) **A PLYWOOD PANEL FOR CRYOGENIC AND LOW-TEMPERATURE APPLICATIONS**
SPERRHOLZPLATTE FÜR TIEFTEMPERATUR- UND TIEFTEMPERATURANWENDUNGEN
PANNEAU DE CONTREPLAQUÉ POUR DES APPLICATIONS CRYOGÉNIQUES ET À BASSE TEMPÉRATURE

(43) Date of publication of application: 19.08.2020
(73) Proprietor: UPM Plywood Oy, 15140 Lahti (FI)
(72) Inventor: KOSKI, Anna, 15610 LAHTI (FI); RAUTIAINEN, Raija, 15160 Lahti (FI); KOPONEN, Simo, 15880 HOLLOLA (FI)
(74) Representative: Berggren Oy

(56) References cited:
- WO-A1-2012/136894
- WO-A1-2015/114195
- WO-A1-2017/220865
- GB-A- 1 504 451

## Description

### Technical field

The invention relates to plywood panels. The invention relates to plywood panels suitable for use at low temperatures, such as in cryogenic applications. The invention relates to uses of such plywood panels. The invention relates to methods for manufacturing plywood panels.

### Background

Plywood has been used as structural material, and plywood has also been used a structural material in liquefied natural gas (LNG) tankers. LNG tankers are examples of LNG cargo containment systems (CCS). Plywood is particularly suitable for that application, since wood is relatively strong and lightweight material that also withstands very low temperatures. Compared to wood, plywood is more isotropic, since it comprises veneers oriented in different directions. In cryogenic applications, such as in LNG CCS, the temperature range in operation may be large, ranging from about +30 °C, when a container is empty, to about -160 °C, when the container is loaded with LNG. Thus, isotropic properties are beneficial from point of view of thermal deformation.

Even if the wooden veneers of plywood are reasonable resistant to a cold environment, it has been observed that the adhesive typically used in plywood panels is not as resistant to a cold environment. In particular, the adhesive may become brittle at low temperatures and/or after having been exposed to a low temperature. In this way, the properties of the plywood panel, including strength, may become unacceptable for use at low temperatures. For these reasons, a plywood panel that is strong and lightweight also at a low temperature and/or after having been exposed to a low temperature is needed. Such problems may emerge at low temperatures, such as -50 °C and below, and/or at cryogenic temperatures, such as -150 °C and below. Document WO2015/114195 discloses a plywood panel resistant at low temperature comprising layers of veneers linked by an adhesive.

### Summary

It has been found that an adhesive comprising resin comprising some polymerizable substance, wherein a certain proportion of the polymerizable substance originates from lignin, functions better at low temperatures and/or after a low temperature treatment than a traditional adhesive for plywood. Moreover, it has been found that hardwood has beneficial properties for low-temperature applications including land storages for liquefied gases and cryogenic applications such as LNG CCS. Compared to softwood, hardwood is more dense and much stronger. A plywood panel according to the invention is disclosed in more specific terms in independent claim 1. A method for manufacturing such a plywood panel is disclosed in more specific terms in independent claim 8. A plywood panel manufacturable by the method is disclosed in independent claim 14. Uses of a plywood panel is disclosed in claims 20 and 21. A preferable use is related to use as a support material in an LNG CCS. Thus, claim 22 relates to a cargo containment system, such as a ship, comprising a plywood panel. A dependent method claim discloses indicating that the plywood panel is suitable for use in a cryogenic application. A dependent claim discloses that the panel or an arrangement comprising the panel comprises an information carrier or a database with information indicative of the plywood panel being suitable for use in a cryogenic application.

### Brief description of the drawings

- Fig. 1: shows, in a side view, a plywood panel according to the invention,
- Fig. 2: shows, in a side view, a plywood panel according to the invention,
- Figs. 3a to 3d: show grain orientations of veneer layers of a plywood panel,
- Figs. 4a: to 4h show, in a side view, grain orientations of veneer layers of a plywood panel,
- Fig. 5: shows, in a side view, manufacturing a plywood panel according to the invention,
- Fig. 6: shows, in a principal view, a ship comprising a plywood panel according to the invention,
- Fig. 7a: shows, a plywood panel with a marking,
- Figs. 7b to 7e: show arrangements having a plywood panel and an information carrier or a database, and
- Fig. 8: shows, in a side view, different regions of an adhesive layer.

### Detailed description

Plywood is one of the most recognized material candidates for structural uses among wood-based panels, because it possesses the advantages of dimensional stability, excellent strength to weight ratio, and high chemical and impact resistance. Therefore, it has traditionally been widely used in light frame construction and regarded as a trusted building product. In general, the wood species, density, grain orientation, veneer quality, number of veneers, adhesive (including bonding resin and its amount), and the way the adhesive has been applied influence the overall properties of plywood. In sheets using the same number and quality of veneers, the mechanical properties of plywood depends strongly on the adhesive type, because plywood is manufactured by gluing several thin veneers under heat and pressure. Phenol-formaldehyde resin has been extensively used as an adhesive resin for plywood. At room temperature, plywood made with phenolic-formaldehyde resin has strong resistance to delamination failures between adjacent layers.

In shipping and offshore industries, phenolic-formaldehyde (PF) resin plywood has also been used for insulation panels in liquefied natural gas (LNG) carrier cargo containment systems (CCS), e.g. ships, to secure structural safety and reliability under LNG storage temperature of -163 °C. Partially filled LNG tanks continuously endure sloshing and sloshing-induced impact loads, which are characterized by high pressures and short durations. However, structural problems such as crack initiation and propagation, buckling, and veneer fracture in phenolic-formaldehyde resin plywood used in LNG CCS have been observed. Therefore, more durable plywood panels are needed for cryogenic applications (i.e. at -150 °C and below). In addition, similar problems have been encountered at other low temperatures, i.e. at -50 °C and below.

In particular, such plywood panels that maintain their mechanical properties also at a low temperature (i.e. less than minus 150 °C) and/or after having been thermally treated at a low temperature (i.e. less than minus 150 °C) are suitable for use in at least some cryogenic and low temperature applications. In the field of liquefied natural gas (LNG) cargo containment system (CCS), the panels for the application need to go through a certifying process in order to determine their suitability for such a use. The present invention relates to a plywood panel 100 for use in liquefied natural gas (LNG) cargo containment system (CCS) in the aforementioned sense. However, such panels are also suitable for other low-temperature applications, as indicated above.

In order to obtain such a plywood panel 100, effects of various adhesives, various amounts of adhesive, veneer materials, and veneers orientations to the mechanical properties after a low temperature treatment have been studied. Among the various possibilities a particularly feasible combination has been identified for cryogenic applications. In particular, hardwood has been found to function better than softwood. Moreover cross-lamination of the veneers is preferred over unidirectional neighbouring veneers. Still further, a lignin adhesive (LA) resin comprising polymerizable substance, of which at least 50 weight-% originates from lignin, was found to be superior compared to phenolic-formaldehyde (PF) resin.

In general, an adhesive 200 used for manufacturing plywood comprises water, resin, and hardener. The hardener may comprise clay, kaolin, starch, microcrystalline cellulose, wood flour, or wheat flour. As for the resin, in general the resin comprises polymerizable substance and crosslinking agent. As an example, in a phenol-formaldehyde resin of prior art, phenol forms the polymerizable substance and formaldehyde is used as the crosslinking agent. As indicated above, a resin of the superior adhesive comprises polymerizable substance, of which at least 50 weight-% originates from lignin. Such an adhesive is typically heat activated. Thus, by applying heat, the adhesive 200 hardens. Typically heat and pressure are applied to bond veneer layers of plywood to each other.

The adhesive 200 is typically made up by mixing the resin, the hardener and some additional water. It is noted that the resin typically also comprises water, whereby the term additional water was used above for the other water. A dry-matter content of the resin may be from 35 to 60 %, preferably from 40 to 55 % and more preferably from 42 to 52 %. The adhesive 200 typically comprises from 60 to 80 wt % resin (including some water), from 10 to 20 wt% hardener and from 10 to 25 wt% additional water. Preferably, the adhesive 200 comprises from 65 to 75 wt % resin. The hardener is typically substantially dry. The additional water is typically added to such an amount that a dry matter content of the adhesive 200 is the same as a dry matter content of the resin before mixing the adhesive. As indicated below, because of the hydroxyl groups of the veneer layers, preferably a dry-matter content of the adhesive 200 is from 35 wt% to 60 wt%, such as from 40 wt% to 55 wt%, such as from 42 wt% to 52 wt%. This, on one hand ensures bonding of the adhesive 200 with wood, and on the other hand ensures a suitable viscosity for the adhesive 200.

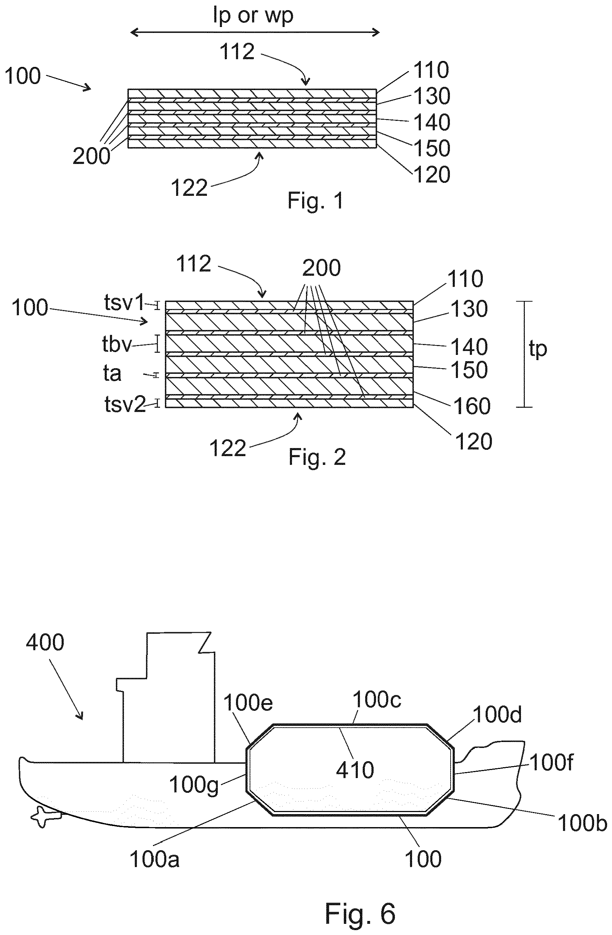

It has been found that such an adhesive functions particularly well that (i) at least 50 weight-% of the polymerizable substance of the resin of the adhesive 200 originates from lignin, (ii) at least 10 % of the molecules in the resin have a molecular weight of above 10000 Da, (iii) at least 10 % of the molecules in the resin have a molecular weight of below 1000 Da, (iv) number-average molar mass Mn of the resin is from 1000 Da to 1600 Da, and (v) weight-average molar mass Mw of the resin is from 5000 Da to 14000 Da. Figs. 1 and 2 indicate a plywood panel, wherein the adhesive 200 that has been used to glue the veneer together is in a hardened form. No separate reference numeral is given to the hardened adhesive. However, the terms adhesive and hardened adhesive are used for the adhesive 200 before hardening and thereafter, respectively, when considered necessary.

As for the terms, as known to a skilled person a number-average molar mass Mn is defined as (ΣNᵢMᵢ)/(ΣNᵢ), wherein Nᵢ is the number of molecules of type i and Mᵢ is the molar mass of molecules of type i. Correspondingly, the weight-average molar mass Mw, often called also as a mass-average molar mass, is defined by (ΣNᵢMᵢMᵢ)/(ΣNᵢMᵢ). It is noted that the product NᵢMᵢ is a mass of the molecules of type i, and herein also a weighting factor in the numerator.

In general, properties of adhesives that affect their resistance to cold temperatures include viscoelasticity, glass-transition temperature, molecular size distribution, degree of crosslinking, and degree of crystallization. As detailed below, in particular the lignin adhesive comprises large molecules and small molecules, which may be a beneficial molecular size distribution for this application. Moreover, it is possible, that the lignin impregnates to wooden veneers in a different manner than PF resin, which may also result in better resistance to cold temperatures.

Without being bound to a theory, it is assumed that the heterogeneous size distribution of the molecules, as indicated by the proportions of large molecules (high Da number) and small molecules (low Da number), improves the ductility of adhesive at low temperatures. Moreover, the average size of molecules, as evidenced by the Mn and Mw numbers, in combination with a significant portion of small molecules, seems to enable the adhesive to co-operate with the wooden veneer layers of plywood such that the adhesive penetrates well to the veneer layers. The adhesive may penetrate to peeling checks and to microgrooves of a rough surface. In particular, a sufficient amount of small molecules, as indicated by a percentage of molecules with a low Dalton number, seems to enable penetration of adhesive into to peeling checks and to microgrooves of the veneers.

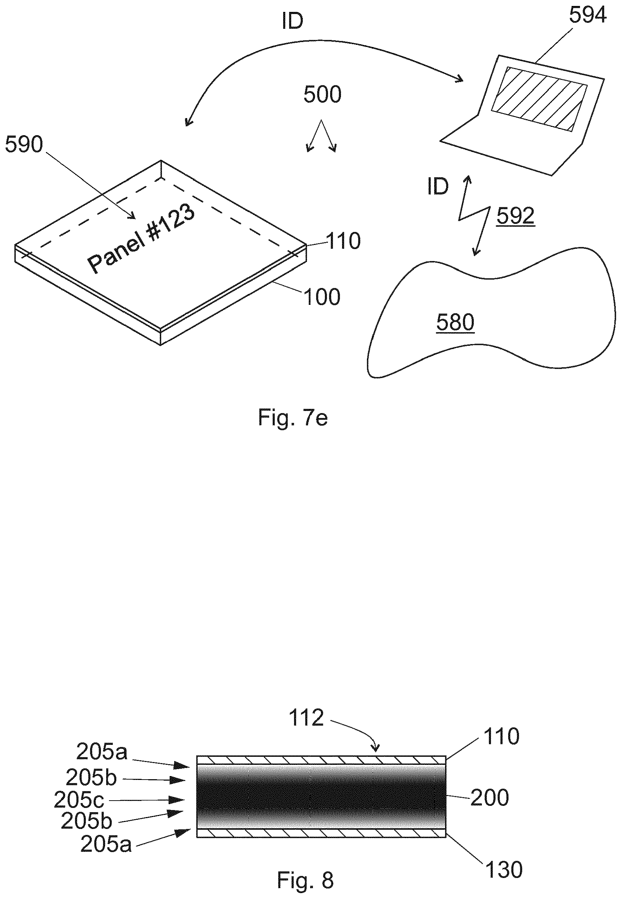

Referring to Fig. 8, in general, when two objects, such as a veneer 110 and another veneer 130 are bonded together with adhesive 200 that is hardened, at least three different parts can be identified from the hardened adhesive. First, as indicated by the reference 205a, an adhesion zone of the hardened adhesive bonds to a surface of a veneer (110, 130) and, after bonding, forms an interface with the veneer (110, 130). Going further away from the interface, there is a transition zone 205b, wherein the properties of the hardened adhesive change from bulk properties to interfacial properties. Going further away from the interface, in a cohesion zone 205c, the adhesive has its bulk properties.

The small molecules may penetrate into the veneers as indicated above. This improves the adhesion in particular in the adhesion zone 205a and the transition zone 205b. However, it seems that the small molecules of the adhesive, if the adhesive consisted of small molecules, would tend to form a regular structure, which may tend to be self-repeating, similar to lattices or grids. However, such regular structures, even if strong, typically tend to be brittle. Therefore, it seems that if the adhesive only comprised small molecules, the adhesive would be brittle. Correspondingly, it seems that the large molecules of the adhesive make the adhesive more ductile. Moreover, in particular lignin is known to comprise molecules of various sizes, and particularly quite a lot of large molecules. Thus, as some of the resin originates from lignin, also these large molecules will be present, and the resulting adhesive will be more ductile also at cold temperatures. The large molecules also ensure that some molecules will be present in the cohesion zone 205c, i.e. not all the adhesive is penetrated into the veneers 110, 130.

Moreover, if the adhesive consisted of small molecules, all the molecules could easily penetrate into the veneers, since wood is porous material. In case only a regular amount of adhesive was used, for this reason, the adhesive layer would become too thin; and possibly no cohesion zone would be present. Such a layer would not have the desirable adhesive properties. Moreover, if the thickness was increased by using more adhesive, the resulting cohesion zone would be brittle as indicated above.

Furthermore, it seems that if the adhesive consisted of large molecules, these large molecules would tend to form a regular, brittle, structure; in a manner similar to what was discussed above for small molecules. Moreover, in such a case the molecules would not penetrate the veneers. As a result, a thick and brittle cohesion zone 205c would be obtained, which would be unreliable because of brittleness.

In this way, also the thickness of the cohesion zone affects the bonding. Preferably a thickness of the cohesion zone 205c is less than 0.2 mm or less than 0.15 mm. As indicated in Fig. 8, the cohesion zone may be slightly thinner than the corresponding adhesive layer. However, in terms of thickness ta (see Fig. 2) of an adhesive layer, preferably a thickness ta of an adhesive layer is less than 0.25 mm, such as from 0.01 mm to 0.25 mm. More preferably, the thickness ta of an adhesive layer is less than 0.20 mm, such as from 0.01 mm to 0.20 mm; or less than 0.15 mm, such as from 0.01 mm to 0.15 mm. The thickness ta refers to a the thickness of an adhesive layer in between two neighbouring layers. In plywood, particularly in regular, non-reinforced, plywood, the thickness ta refers to the thickness of the adhesive layer in between two neighbouring veneer layers. Moreover, preferably this thickness range applies to each adhesive layer in between two neighbouring layers; in particular to such adhesive layers that are arranged in between the first veneer layer 110 and the second veneer layer 120. In case other material layer are attached to the panel 100, e.g. as protection or coating, thicker adhesive layers may be used for this purpose.

The greater penetration, which is associated with the small molecules of the adhesive 200, is associated with more surface contact between the adhesive 200 and the wood substance (i.e. the veneers 110, 130), thus increasing the potential for secondary bonding forces and covalent bonding between the adhesive 200 and the wood substance. Penetration into cracks and encapsulation of damaged cells at the surface will improve bond performance. Since the wood surrounding the interface of the adhesive bond contributes to bond performance, reinforcement of the wood in the interface will affect bond strength and stiffness positively. In this way, using an adhesive having a heterogeneous molecular size distribution has synergy with the surface structure of the veneer layers 110, 130 in such a manner that a strong, cold resistant, plywood panel is obtained.

Even if lignin as such has a heterogeneous size distribution, preferable the resin of the adhesive 200 comprises lignin and at least one of phenol, cresol, and resorcinol; more preferably the resin of the adhesive 200 comprises lignin and phenol. Also preferably, at most 95 wt% of the polymerizable substance of the resin of the adhesive 200 originates from lignin.

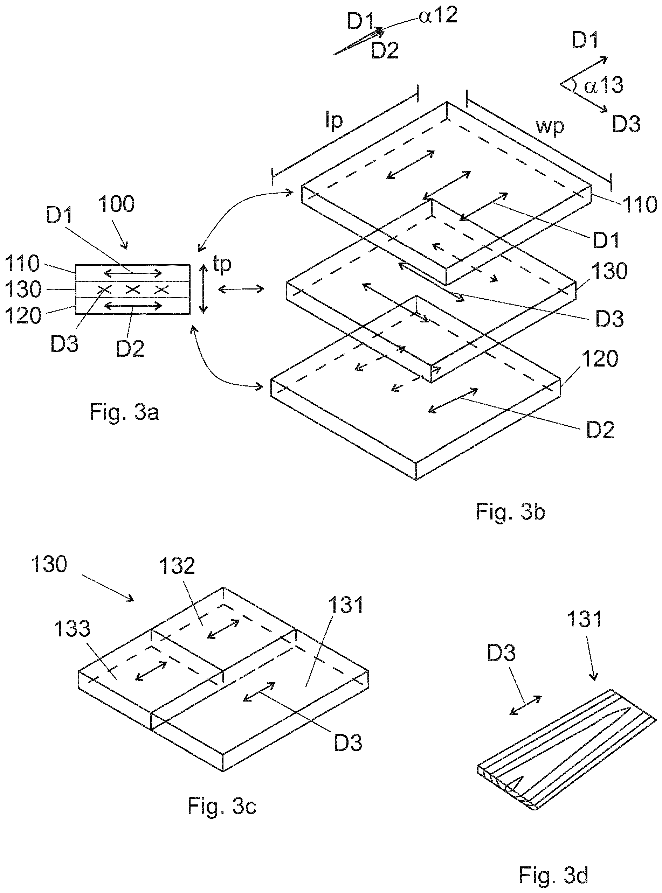

Fig. 1 shows, in a side view, a plywood panel 100 according to an embodiment. In general, a plywood panel 100 has a length lp, a width wp, and a thickness tp. As conventional for the names, the thickness tp is less than the smaller of the length Ip and the width wp. The thickness tp is shown in Fig. 2. The length Ip and width wp are shown in Figs. 1 and 3b. Typically, the length Ip is at least 1 metre, and the width wp is at least 1 metre. In use, the panel 100 may be cut to a desired dimension. The thickness tp is typically less than 100 mm. Preferable thicknesses tp for low-temperature and cryogenic applications will be detailed below.

For the reasons indicated above, the plywood panel 100 comprises a first veneer layer 110 comprising hardwood having a first grain orientation D1, a second veneer layer 120 comprising hardwood having a second grain orientation D2, and a third veneer layer 130 comprising hardwood having a third grain orientation D3.

The term hardwood refers wood from a deciduous tree. In particular, in an embodiment, the veneer layers (of the plywood panel 100) that comprise hardwood, comprise one of ash, aspen, basswood, beech, birch, cherry, hickory, mahogany, maple, oak, poplar, lauan, teak, rosewood, okume, and meranti; preferably birch or beech.

As for the names of these veneer layers, the third veneer layer 130 is arranged in between the first veneer layer 110 and the second veneer layer 120 in the direction of the thickness tp of the plywood panel 100. Correspondingly, the first veneer layer 110 is an outermost veneer layer. Therefore, all the veneer layers of the panel 100 that comprise wood, except the first veneer layer 110 itself, are arranged on a same side of the first veneer layer 110. In addition, also the second veneer layer 120 is an outermost veneer layer. Therefore, all the veneer layers of the panel 100 that comprise wood, except the second veneer layer 120 itself, are arranged on a same side of the second veneer layer 120. This applies irrespective of whether or not the panel 100 is coated with a coating not comprising wood.

Typically the plywood panel 100 is not coated, since coating increases the weight of the panel 100 without significantly improving its strength. Therefore, at least one of the main surfaces 112, 122 of the plywood panel 100 may be free from coating. Thus, in an embodiment, the first veneer layer 110 forms a first surface 112 of the plywood panel 100, wherein a normal of the first surface 112 of the plywood panel 100 is unidirectional with a direction of the thickness tp of the plywood panel 100. Such a first surface 112 is shown in Figs. 1 and 2. As indicated above, when not coated, the wooden material of the first veneer layer 110 forms the first surface 112. Moreover, in an embodiment, the second veneer layer 120 forms a second surface 122 of the plywood panel 100, wherein a normal of the second surface 122 of the plywood panel 100 is unidirectional with a direction of the thickness tp of the plywood panel 100.

Such a second surface 122 is shown in Figs. 1 and 2. As indicated above, when not coated, the wooden material of the second veneer layer 120 forms the second surface 122.

Referring to Figs. 3a and 3b, in order for the plywood panel 100 to have somewhat isotropic properties, the first grain orientation D1 forms an angle α13 with the third grain orientation D3, wherein the angle α13 is from 60 to 120 degrees. Typically, the angle α13 is 90 degrees, or at least substantially 90 degrees (e.g. from 85 to 95 degrees). The angle α13 is shown in Fig. 3b. In a preferable embodiment, the first grain orientation D1 is unidirectional with the second grain orientation D2 or the first grain orientation D1 forms an angle α12 of at most 30 degrees with the second grain orientation D2. As observable from Fig. 3b, therein the angle α12 is small, i.e. the first grain orientation D1 is substantially unidirectional with the second grain orientation D2. Evidently, the first grain orientation D1 may be unidirectional with the second grain orientation D2. Having the first veneer layer 110 and the second veneer layer 120 oriented so that their grain orientations D1 and D2 are at least substantially unidirectional (in the meaning disclosed above) has the technical effect that the panel 100 can be used either the first surface 112 or the second surface 122 oriented in a predefined direction, e.g. upwards. In other words, the panel 100 responds to mechanical load in a similar manner irrespective of whether the first surface 112 or the second surface 122 is directed to the predefined direction, e.g. upwards. For example, in bending, the grain orientation has an effect on the bending modulus. In particular, under bending, the surface layers take in most deformation of the panel (compression or elongation depending on the side of the panel). Since each veneer layer is anisotropic, this has a direct effect on the properties of the panel. Moreover, bending a veneer about an axis that is perpendicular to the grain orientation of the veneer may have the effect that some grains of the wood partially disintegrate from the veneer, whereby small splinters may protrude from the veneer. Also for this reason, if the grain orientations D1 and D2 were perpendicular, the panel 100 would behave differently when used upside down than when used upside up. In this way, this improves the usability of the panel 100 and makes it more easy to manufacture designed structures from the panel 100.

The veneer layers of the plywood panel 100, in particular the first, second, and third veneer layers (110, 120, 130) have been attached to each other using adhesive 200 (see Figs. 1 and 2). Details of the adhesive have been discussed above.

Figures 3a to 3d show the structure of the plywood panel 100 in more detail. Fig. 3a shows, in a side view, a panel 100 with three veneer layers 110, 120, 130. These veneer layers comprise hardwood with grain orientations D1, D2, and D3, respectively. The arrows shown in the layers 110 and 120 indicate a grain direction D1, D2 from left to right or from right to left in Fig. 3a. The cross mark shown in the layer 130 in Fig. 3a indicates a grain direction D3 that is perpendicular to the plane of the paper showing the cross mark. Even if adhesive 200 is not shown in between the veneer layers, the veneer layers have been glued to each other using the adhesive 200 as detailed above.

Fig. 3b shows an exploded view of panel of Fig. 3a. Fig 3c shows in principle, how a veneer layer 130 may be constituted from more than one veneers 131, 132, 133. However, for illustrative purposes, the grain direction D3 of Fig. 3c is different from that of Fig. 3b. Finally, Fig. 3d shows a veneer 131, annual rings observable from the veneer, and a grain orientation D3 of the veneer 131 of Fig. 3c. As shown in Fig. 3d, in wood, the annual rings extend, in a ring form, in the grain orientation.

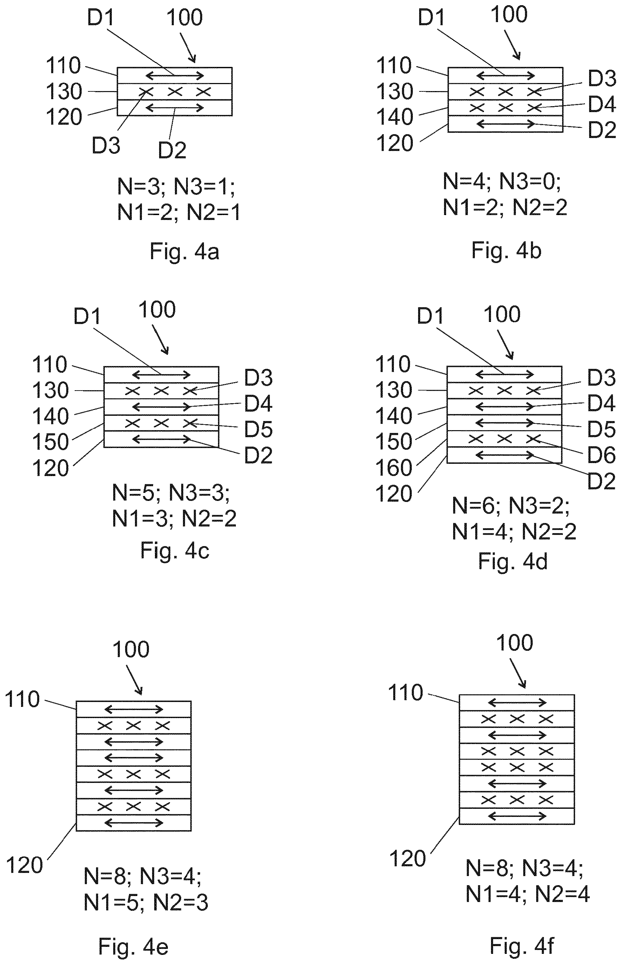

Figs. 4a to 4d show preferable grain orientations of the veneer layers for a plywood panel 100 with three, four, five, and six veneer layers. A plywood panel may comprise e.g. from three to seventy-five (3 to 75) veneer layers. In the figures 4a to 4d, the symbol N stands for the number of veneer layers of the plywood panel 100. Apart from the first, second, and third veneer layer, the other veneer layers 140, 150, 160 comprise wood. Preferably also the other veneer layers 140, 150, 160 comprise hardwood. Preferably, the number N of veneer layers of the plywood panel 100 is at least five such as from 5 to 75. Figs. 4e to 4h show panels with eight or ten veneer layers.

Also in Figs. 4a to 4h the arrows indicate grain orientations from left to right (or vice versa) and the cross marks indicate grain orientations perpendicular to plane of paper, respectively, as discussed above in connection with Figs. 3a to 3d. As indicated in Figs. 4a to 4d, in an embodiment, a first number N1 of the veneer layers (110, 120, 130, 140, 150, 160) of the plywood panel 100 are oriented in the first grain orientation D1 (or in an orientation substantially unidirectional with the first grain orientation D1 in the meaning discussed above for D2). A second number N2 of the veneer layers (110, 120, 130, 140, 150, 160) of the plywood panel 100 are oriented in a grain orientation that is perpendicular to the first grain orientation D1 (or in an orientation substantially perpendicular to the first grain orientation D1 in the meaning discussed above for D3).

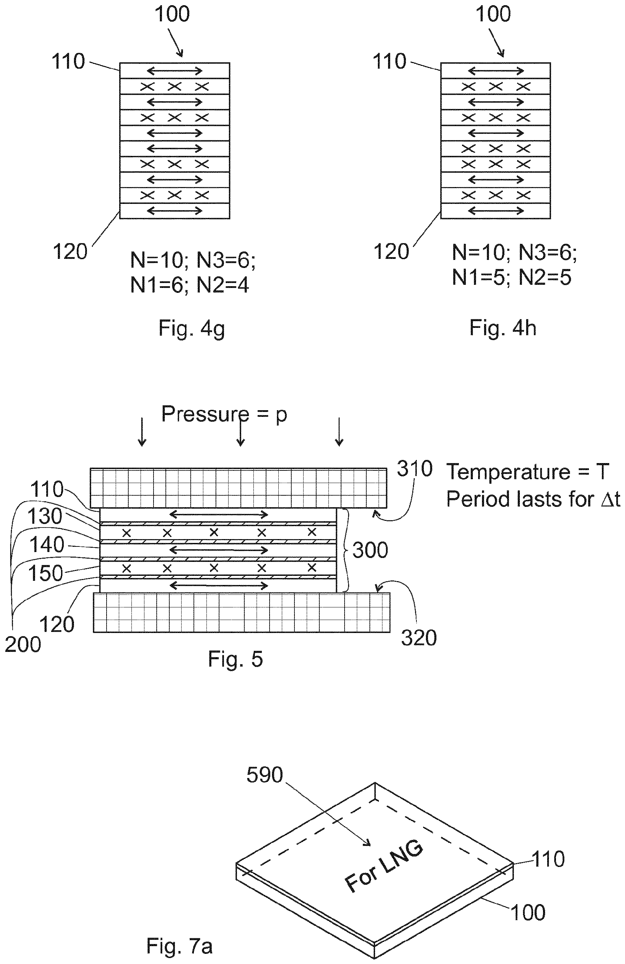

In order for the panel 100 to be substantially isotropic, preferably, the first number N1 is substantially equal to N2. More precisely, a difference N1-N2 between the first number N1 and the second number N2 is at most two. Moreover, since N1 is the number of veneer layers oriented in the first grain orientation D1, including at least the first veneer layer 110 and preferably also the second veneer layer 120, the difference N1-N2 is preferably at least zero. In other words, N1 is not less than N2. For example, Figs. 4f and 4h show embodiment, where N1=N2.

Even more precisely, in case the number of veneers N is odd (i.e. N is expressible as 2M+1, wherein M is an integer), the first number N1 is greater than the second number N2 by one (i.e. N1=N2+1). Such panels 100 are shown in Figs. 4a and 4c.

However, when the number N is even (i.e. N is expressible as 2M, wherein M is an integer), in order to have the outermost veneer layers 110, 120 oriented in the same orientation, two neighbouring intermediate veneer layers are oriented in the same orientation, as depicted in Figs. 4b, 4d, 4e, 4f, 4g, and 4h. As for the term "intermediate veneer layer", each intermediate veneer layer has two neighbouring veneer layers. As for the term "neighbouring veneer layer", no veneer layer comprising wood is arranged in between each pair of two neighbouring veneer layers. However, in case some other structural layers not comprising wood, e.g. reinforcing layers, are used within the panel 100, such another layer not comprising wood may be arranged in between two neighbouring veneer layers. In such a case, the other structural layer is a neighbouring layer to a veneer layer.

For example, in Fig. 4a, the intermediate veneer layer 130 has neighbouring veneer layers 110 and 120. In this sense, the outermost veneer layers 110, 120 are not intermediate veneer layers. Moreover, in all the figures, all the veneer layers except the outermost veneer layers 110, 120 are intermediate veneer layers.

Referring to Figs. 4b, 4d, 4e, 4f, 4g, and 4h, preferably when N is even, the first number N1 equals the second number N2 (i.e. N1=N2) or the first number N1 is greater than the second number N2 by two (i.e. N1=N2+2). Moreover, as indicated in the figures, preferably, the first grain orientation D1 is perpendicular to a grain orientation of a veneer layer that is a neighbouring veneer layer to the first veneer layer 110. Also preferably, the second grain orientation D2 is perpendicular to a grain orientation of a veneer layer that is a neighbouring veneer layer to the second veneer layer 120. Also preferably, the first 110 and second 120 veneer layers have unidirectional grain orientations.

While the numbers N1 and N2 relate to the isotropy of the whole panel 100 in the planar directions of the panel (i.e. the direction of the length Ip or the direction of the width wp or a linear combination of these directions), the distribution of the veneers oriented in different directions in the direction of thickness affect the isotropy locally. Since the panel 100 is preferably equally usable both upside up and upside down, preferably, as many neighbouring veneers are oriented cross-wise relative to each other as possible.

Referring to Figs. 4a to 4h, unlike the outermost veneer layers (110, 120), each one of the intermediate veneer layers 130, 140, 150, 160 has a first and a second neighbouring veneer layer. For example, Fig. 4b, the intermediate veneer layer 130 has neighbouring layers 110 and 140; and the intermediate veneer layer 140 has neighbouring layers 130 and 120.

In general, in order for the plywood panel 100 to be also locally isotropic (local in the meaning of position in the direction of thickness), preferably as many of the intermediate veneer layers as possible has two neighbouring veneer layers, of which grain orientation is perpendicular to the grain orientation of the intermediate veneer layer in question. A condition limiting the number is that the outermost veneer layers are even more preferably oriented in the same direction.

Referring in particular to Figs. 4a and 4c, when the number N of veneers layers of the panel 100 is odd (i.e. expressible as 2M+1, where M is an integer), preferably each one of the intermediate veneer layers has two neighbouring veneer layers, of which grain orientation is perpendicular to the grain orientation of the intermediate veneer layer in question.

However, referring to Figs. 4b and 4d to 4h, when the number N of veneers layers of the panel 100 is even (i.e. expressible as 2M, where M is an integer), preferably each one of the intermediate veneer layers, except two intermediate veneer layers, has two neighbouring veneer layers, of which grain orientation is perpendicular to the grain orientation of the intermediate veneer layer in question. The two layers not having such neighbouring layers results from the grain directions of the outermost veneer layers (110, 120) being unidirectional and the number N being even.

As indicated in Figs. 4a to 4h, each intermediate veneer layer has a first neighbouring veneer layer and a second neighbouring veneer layer. Moreover, a third number N3 of the intermediate veneer layers are such that
- a grain direction of the intermediate veneer layer in question is perpendicular to a grain direction of the first neighbouring veneer layer of the intermediate veneer layer in question and
- the grain direction of the intermediate veneer layer in question is perpendicular to a grain direction of the second neighbouring veneer layer of the intermediate veneer layer in question.

Figures 4a to 4h show the total number of veneers N and the number N3 of such intermediate veneer layers that have two cross-oriented neighbouring veneer layers. As indicated in these figures, the third number N3 of the intermediate veneer layers is less than the number of veneers N by two or four. In other words, the number of veneers N exceeds by two or by four the third number N3. Or, mathematically: N3=N-2 or N3=N-4.

Preferably, when the number N of veneer layers of the plywood panel 100 is expressible as 2M+1, wherein M is an integer number, the third number (N3) is less than the number N of veneer layers by two (N3=N-2). I.e. N exceeds N3 by two.

Also preferably, when the number N of veneer layers of the plywood panel 100 is expressible as 2M, wherein M is an integer number, the third number N3 is less than the number N of veneer layers by four N3=N-4. I.e. N exceeds N3 by four.

In addition to the grain orientations of the veneer layers, the isotropy of the plywood panel 100 may be affected by structural layers not comprising wood, in particular if such structural layers are anisotropic. Thus, what has been said above about the numbers N1, N2, and N3 needs not to apply in all embodiments. However, a preferable plywood panel 100 only comprises the layers of hardened adhesive and the intermediate veneer layers in between the outermost veneer layers 110, 120. Thus, a core of the panel 100, the core being the part in between the first and second veneer layers 110, 120, is preferably free from structural layers not comprising wood except for the hardened adhesive 200. Moreover, a preferable plywood panel 100 only comprises the layers of hardened adhesive and the intermediate veneer layers in between the outermost veneer layers 110, 120 and what has been said about the numbers N1, N2, and/or N3 applies. Even more preferably, the panel 100 is not coated. In such a case, the plywood panel 100 consists of layers of hardened adhesive and veneer layers comprising wood. Moreover, preferably, what has been said about the numbers N1, N2, and/or N3 applies. The adhesive 200 has been found to function well also in cryogenic applications at least between wooden veneer layers of the panel 100.

Referring to Figs. 4b to 4h, a preferred embodiment of the plywood panel 100 comprises, in addition to the first, second and third veneer layer, a further veneer layer (140, 150, 160) or further veneer layers (140, 150, 160) arranged in between the first veneer layer 110 and the second veneer layer 120. The further veneer layer comprises wood and, if present, the further veneer layers comprise wood. Preferably, all the veneer layers (110, 120, 130, 140, 150, 160) that comprise wood comprise hardwood, such as one of ash, aspen, basswood, birch, cherry, hickory, mahogany, maple, oak, poplar, lauan, teak, rosewood, okume, and meranti; preferably birch or beech.

Preferably a thickness tbv of each one of the intermediate veneer layers 130, 140, 150 is from 1.0 mm to 3.0 mm; more preferably from 1.0 mm to 2.0 mm. Preferably a thickness of the first veneer layer 110 and/or the second veneer layer 120 is from 0.5 mm to 3.0 mm; more preferably from 0.5 mm to 2.0 mm. In an embodiment, at least one of the first veneer layer 110 and the second veneer layer 120 is thinner than an intermediate veneer layer 130, 140, 150. In an embodiment, the thickness tsv1 of the first veneer layer 110 is equal to the thickness tsv2 of the second veneer layer 120. This has the technical effect that the panel 100 is equally usable upside up and upside down.

The thickness tp of the plywood panel is preferably from 4 mm to 95 mm. A preferable number of veneer layers has been indicated above.

As indicated in detail below, the thicknesses tsv1 and tsv2 of a surface veneer layer of the panel 100 may be less than the thickness tbv an intermediate veneer layer e.g. because of sanding at least one of the surface veneer layers. However, if a surface veneer layer 110, 120 is too thin, it may not protect the underlying adhesive sufficiently. Thus, the surface veneer layer could break in use or during transport and expose the adhesive, which, in general, is not acceptable. Therefore, in an embodiment a thickness tsv1 of the first veneer layer 110 is at least half of a thickness tbv of the third veneer layer 130, which is an intermediate veneer layer. Preferably also a thickness tsv2 of the second veneer layer 120 is at least half of a thickness tbv of the third veneer layer 130.

As for a preferably amount of hardened adhesive in the plywood panel 100, below in the context of a manufacturing method, a preferable amount of the (liquid) adhesive 200 will be disclosed. The adhesive 200, when applied comprises some water, of which a substantial part evaporates during manufacturing and/or storage, leaving the dry matter of the adhesive 200 in between the veneer layers of the plywood panel 100. Furthermore, when the dry matter hardens, at least some of the resin thereof undergoes polymerization. In view of the amount of adhesive 200 applied and its water content, in an embodiment from 40 g/m² to 120 of hardened adhesive is arranged to an interspace between two neighbouring layers. Preferably, from 50 g/m² to 100 g/m² of hardened adhesive is arranged to an interspace between two neighbouring layers. This amount of hardened adhesive has been found to function particularly well in a plywood panel 100 having veneer layers (110, 120, 130) made from hardwood. This amount has been found to correlate with a suitable thickness ta of an adhesive layer of the plywood panel, in particular suitable thicknesses of a cohesion zone 205c, as discussed above. Moreover, this amount of hardened adhesive has been found to function particularly well in plywood having such veneer layers made from hardwood that the thickness of each intermediate veneer layer is from 1.0 to 3.0 mm or from 1.0 to 2.0 mm. Thus, even more preferably, from 40 g/m² to 120 g/m² or from 50 g/m² to 100 g/m² of hardened adhesive is arranged to each interspace between two neighbouring layers. The neighbouring layers may be such neighbouring veneer layers that no structural layer of other material than wood or hardened adhesive is arranged in between the neighbouring veneer layers. By definition, no wooden layer is arranged between two neighbouring veneer layers.

It has been found that a plywood panel 100 as described above is resistant to two types of thermal treatment: a thermal shock treatment and a liquefied gas immersion treatment. Herein the wording resistant to thermal treatment means that the thermal treatment does not significantly deteriorate some mechanical properties of a plywood panel 100. Such mechanical properties include bending strength (as measured lengthwise and crosswise) and elastic modulus under bending (as measured lengthwise and crosswise). These properties should not significantly decrease in the thermal treatment. In addition, the panel 100 may be resistant to thermal treatments such that neither of the thermal treatments deteriorates some other mechanical properties of the plywood panel 100. Moreover, the inventors believe, in view of references [1] and [2], that a plywood panel 100 that is resistant to these two types of thermal treatment is also suitable for LNG CSS and other low-temperature applications.

The bending strength refers to bending strength as defined in the standard EN 310 (1993). It is noted that the standard EN 310 refers to longitudinal and transversal directions, which are commonly called lengthwise and crosswise, as above. In general terms, according to the standard EN 310, test specimens are cut from a plywood panel 100 panel, and bending strengths are measured both crosswise and lengthwise. A longitudinal bending strength and a crosswise bending strength are indicated as averages of the measured values. Before the specimens are broken, a bending modulus can be determined from the specimens.

As for resistance to thermal treatment, in general terms, test specimens are cut from a plywood panel 100 panel, and the test specimens are divided to two groups such that the test specimens of the first group go through the thermal treatment before the strength test (e.g. EN 310 or NFB51-123), and the test specimens of the second group do not go through the thermal treatment before the strength test (e.g. EN 310 or NFB51-123). Moreover, since the strength is measured both in longitudinal and crosswise directions, the specimens of the first group are further divided to a first set and a second set for longitudinal measurements and crosswise measurements, respectively. For the same reason, the specimens of the second group are further divided to a third set and a fourth set for longitudinal measurements and crosswise measurements, respectively. If needed, the size of the test specimens may differ from the sizes indicated in the standards.

As for the types of thermal treatment, two types of treatments are known e.g. from the references [1] and [2]: a thermal shock treatment and a liquefied gas immersion treatment.

The thermal shock treatment was performed by immersing the test specimens of the first group in Liquid Nitrogen (LN₂) for 1 hour followed by placing the specimens at room temperature (23 °C) for 2 hours. This 3-hour cycle was repeated 3 times (total duration of the treatment was 9 hours). The liquefied gas immersion treatment was performed by immersing the test specimens of the first group in Liquefied Natural Gas (LNG) for 15 days. Thereafter, the tests were performed for room temperature samples and at room temperature. These treatments have been designed to meet the approval documents of a membrane-type LNG CCS (including Grand Storage Tank and other liquid gas applications), which specify the guidelines for the process of cryogenic testing. Such and similar tests have been described e.g. in the references [1] and [2].

Table 1 shows bending strengths as measured similar to EN 310 from eight panels, such that half of the specimens cut from the panels have gone through the thermal immersion test described above.

**Table 1: Comparative results of bending strength of plywood panels.**

| | | Lengthwise | | | Crosswise | | |
|---|---|---|---|---|---|---|---|
| Panel | | Bending strength (Mpa) | | | Bending strength (Mpa) | | |
| thickness | Adhesive | No | After | reduction | No | After | reduction |
| (mm) | | immersion | Immersion | (%) | immersion | immersion | (%) |
| 9 | LA | 85 | 87 | -2% | 67 | 70 | -4 % |
| 9 | PF | 102 | 87 | 15 % | 64 | 58 | 9 % |
| 9 | LA | 84 | 90 | -7% | 68 | 73 | -7% |
| 9 | PF | 83 | 74 | 11% | 62 | 61 | 2 % |
| 12 | LA | 82 | 86 | -5% | 65 | 69 | -6% |
| 12 | PF | 78 | 77 | 1% | 57 | 56 | 2 % |
| 12 | LA | 76 | 74 | 3% | 65 | 64 | 2% |
| 12 | PF | 76 | 71 | 7 % | 61 | 58 | 5 % |

For the results of Table 1, four different types of plywood panels 100 were studied, and two panels of each type was measured, whereby eight panels 100 were studied. The type is defined by the thickness of the panel, which is either 9 mm or 12 mm, and by the type of adhesive, denoted by PF and LA. PF stands for a conventional phenol-formaldehyde adhesive. LA stands for lignin adhesive, and is the adhesive 200 as detailed above and below. Moreover, the polymerizable substance of the lignin adhesive used in the plywood panels 100 that were tested for Tables 1 to 3 comprised, in addition to lignin, phenol.

Bending strengths of two plywood panels of each four types as measured similar to EN 310 and described above. In table 1, each row corresponds to results measured from one panel. As detailed above, specimens were cut from each panel. The specimens were divided to two groups, i.e. four sets. Specimens of first and second sets (i.e. first group) went through the thermal immersion test; a lengthwise bending strength was measured as an average of the samples from the first set of samples with the lengthwise grain orientation; and a crosswise bending strength was measured as an average of the samples from the second set of samples with the crosswise grain orientation. These results are given in Table 1 in the columns "After immersion". Moreover, specimens of third and fourth sets (i.e. second group) did not go through any thermal treatment; a lengthwise bending strength was measured as an average of the samples from the third set of samples with the lengthwise grain orientation; and a crosswise bending strength was measured as an average of the samples from the fourth set of samples with the crosswise grain orientation. These results are given in Table 1 in the columns "No immersion".

As indicated in Table 1, when using the lignin adhesive "LA", the bending strength of the plywood panel increased in the immersion test. The strength increased, on average, 3 % and 4 % in the lengthwise and crosswise directions, respectively. In contrast, when phenolic adhesive "PF" was used, the bending strength of the plywood panel decreased in the immersion test. The strength decreased, on average, 8 % and 4 % in the lengthwise and crosswise directions, respectively. This clearly indicates that use of the lignin adhesive to join the veneer layers together helps the plywood panel 100 to withstand thermal immersion. The panels with the adhesive 200 (i.e. lignin adhesive LA") were found to function well also in a thermal shock test.

Table 2 indicates bending moduli; i.e. "modulus of elasticity in bending" as measured similar to EN 310 from the panels. In addition to the bending strength, before breaking a modulus of elasticity in bending (i.e. bending modulus) can be measured. Half of the specimens cut from the panels have gone through the thermal immersion test. The same panels are used in these tests as in the tests of which results are given in table 1.

**Table 2: Comparative results of bending moduli of plywood panels.**

| | | Lengthwise | | | Crosswise | | |
|---|---|---|---|---|---|---|---|
| Panel | | Bending modulus (Mpa) | | | Bending modulus (Mpa) | | |
| thickness | Adhesive | No | After | reduction | No | After | reduction |
| (mm) | | immersion | immersion | (%) | immersion | immersion | (%) |
| 9 | LA | 9303 | 9299 | 0% | 5523 | 5471 | 1% |
| 9 | PF | 10318 | 9654 | 6% | 5033 | 5148 | -2 % |
| 9 | LA | 8974 | 9055 | -1% | 5584 | 5595 | 0 % |
| 9 | PF | 8677 | 8452 | 3 % | 5403 | 5506 | -2 % |
| 12 | LA | 9043 | 9344 | -3% | 5967 | 6003 | -1 % |
| 12 | PF | 8887 | 8978 | -1% | 5325 | 5281 | 1% |
| 12 | LA | 9088 | 8598 | 5 % | 6234 | 6141 | 1 % |
| 12 | PF | 9129 | 8178 | 10% | 5630 | 5219 | 7% |

As indicated in Table 2, when using the lignin adhesive "LA", the bending modulus of the plywood panel was practically unaffected in the immersion test. In contrast, when phenolic adhesive "PF" was used, the bending modulus of the plywood panel decreased in the immersion test. The bending modulus decreased, on average, 5 % and 1 % in the lengthwise and crosswise directions, respectively. This clearly indicates that use of the adhesive LA to join the veneer layers together helps the panel to withstand thermal immersion.

In addition, a tensile strength of plywood panels was measured in a manner similar to that discussed above. However, instead of measuring the bending modulus and strength similar to EN 310, tensile strength was measured according to the standard NFB51-123. Moreover, instead of treating the panel in a thermal immersion test, the panels were subjected to the thermal shock test as detailed above. I.e. the specimens (i.e. those of the first group) that went through a thermal treatment went through a thermal shock, in which the specimens were immersed into liquid nitrogen (LN₂) and surfaced to room temperature three times, as detailed above. The tensile strengths were measured for five panels, and the results are indicated in Table 3.

**Table 3: Comparative results of tensile strength of plywood panels.**

| | | Lengthwise | | | Crosswise | | |
|---|---|---|---|---|---|---|---|
| Panel | | Tensile strength (MPa) | | | Tensile strength (MPa) | | |
| thickness | Adhesive | No | After | reduction | No | After | reduction |
| (mm) | | treatment | therm. Shock | (%) | treatment | therm. Shock | (%) |
| 9 | LA | 70 | 78 | -11 % | 60 | 65 | -8% |
| 9 | PF | 84 | 82 | 2% | 62 | 59 | 5% |

As indicated in Table 3, the tensile strength of the plywood panels with lignin adhesive ("LA") increased in the thermal shock test, while the tensile strength of the plywood panels with phenol-formaldehyde adhesive ("PF") decreased in the thermal shock test. This clearly indicates that use of the adhesive LA to join the veneer layers together helps the panel to withstand thermal shocks.

Even if not shown in tables, tensile strength perpendicular to the plane of the board was performed according to standard EN-319 both for specimens that went through a thermal treatment and for specimens that did not go through a thermal treatment. Also there results indicated that that use of the adhesive LA to join the veneer layers together helps the panel to withstand thermal shocks. In addition shearing strength was determined using shear test in tensile loading similar to EN-314 both for specimens that went through a thermal treatment and for specimens that did not go through a thermal treatment. Also there results indicated that that use of the adhesive LA to join the veneer layers together helps the panel to withstand thermal shocks.

As indicated above, the plywood panel 100 is particularly suitable for use both at a low temperature (i.e. below minus 50 °C) and in a cryogenic application, such as at temperature of less than minus 150 °C; such as for use in LNG CCS. Therefore, a manufacturer of the panel 100 may indicate to a customer of this suitability. Moreover, the manufacturer may sell the panel 100 together with information indicative of the suitability. Such information may be indicated on the panel 100 itself or separately, as detailed below.

With reference to Fig. 7a, in an embodiment, the plywood panel 100 comprises an information carrier 590 carrying information indicative of the plywood panel 100 being suitable for use at a temperature below minus 50 °C and or for use in a cryogenic application. For example, a surface 112, 122 of the plywood panel may comprise a marking indicative of such use. Thus an outermost veneer 110, 120 may serve as the information carrier 590. Alternatively, an adhesive label, e.g. a removable adhesive label, may be attached to the panel 100 to indicate suitability for use at a temperature below minus 50 °C, e.g. in LNG CCS.

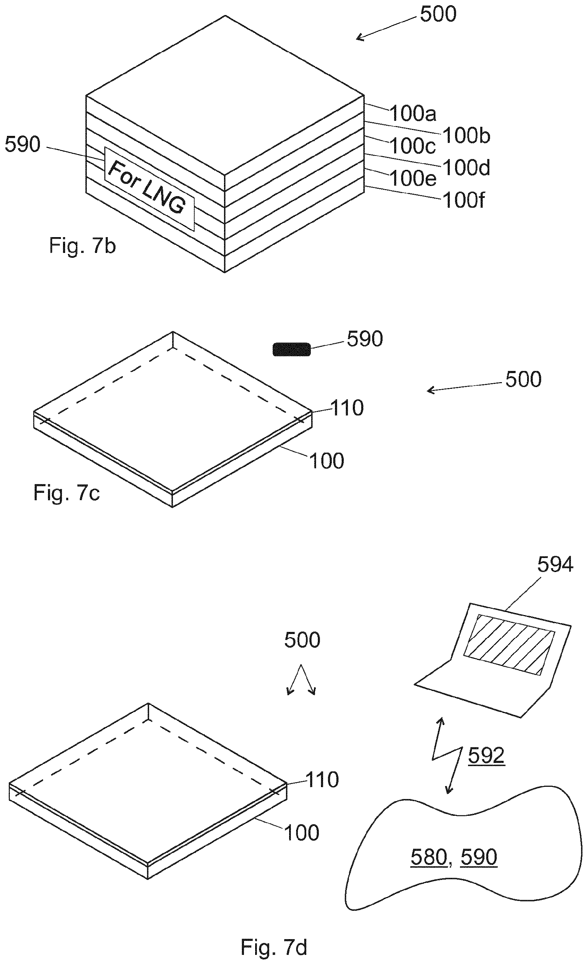

With reference to Figs. 7b to 7d, in the alternative or in addition, the manufacturer of the plywood panel 100 may form an arrangement 500 comprising the plywood panel 100 and further comprising an information carrier 590 carrying information indicative of the plywood panel 100 being suitable for use at a low temperature and/or in a cryogenic application. For example, the panel 100 may be arranged into a pile of panels (100a, 100b, 100c, 100d, 100e, 100f), as in Fig. 7b, and a wrapping or a pallet of the pile of panels may be marked to indicate that the panel 100 of the pile of panels is suitable for such for use at a low temperature and/or in a cryogenic application. Thus, e.g. the wrapping or an adhesive label may be the information carrier 590. Such a label could be applied directly onto at least one the panels 100.

Referring to Fig. 7c, in the alternative or in addition, the information carrier 590 may be a brochure. Thus, the arrangement 500 may comprise a brochure indicating the panel 100 is suitable for such for use at a low temperature and/or in a cryogenic application. Such a brochure may be distributed in electronic form. For example, a computer readable memory may serve as the information carrier. A database comprising the information may be stored in the computer readable memory. E.g. in Fig. 7c, the information carrier 590 may be a computer readable memory, such as a memory stick. The information carrier may carry information indicative of the plywood panel 100 being suitable for use in a ship 400 configured to transport liquefied natural gas.

Referring to Fig. 7d, the information carrier 590 may by a data storage accessible by a computer 594 via an interface 592. The data storage 590 may comprise a database 580. The interface 592 may be a wireless interface. Information in the information carrier may be referred to as first information. As indicated above, the first information may be indicative of the plywood panel being suitable for use at a low temperature and/or in a cryogenic application, such as LNG CCS.

Referring to Fig. 7e, the information carrier 590 may comprise first information indicative of an identity ID of the plywood panel 100 or a pile of plywood panels (100a, 100b, 100c). A database 580 may comprise second information, wherein the second information comprises, in association with the identity ID, information that the panel 100 or pile of panels with the identity ID is suitable for use at a low temperature and/or in a cryogenic application, such as LNG CCS. Thus, by accessing a database 580 comprising the second information with the identity ID (i.e. first information), information indicative of the panel 100 or the pile of panels being suitable for use at a low temperature and/or in a cryogenic application (in particular LNG CCS) can be obtained. The database 580 may be accessed by a computer 594 via an interface 592. In this case, both the first and the second information, in combination, are indicative of the plywood panel being suitable for use at a low temperature and/or in a cryogenic application, such as LNG CCS.

In this way, in an embodiment, the plywood panel 100 or and arrangement 500 comprising the plywood panel 100 further comprises [a] an information carrier 590 carrying first information indicative of an identity of the panel 100 and/or [b] a database 580 comprising second information, wherein the second information, optionally in combination with the first information, is indicative of the panel with the identity being suitable for use at a low temperature and/or in cryogenic application, such as LNG CCS. Thus, the first and/or second information, optionally in combination, may be indicative of the plywood panel 100 being suitable for use at a low temperature and/or in cargo containment system (CCS) configured to transport liquefied natural gas (LNG).

The plywood panel 100 can be manufactured by a method for manufacturing a plywood panel 100. The method comprises arranging available a first veneer layer 110 comprising hardwood having a first grain orientation D1, a second veneer layer 120 comprising hardwood having a second grain orientation D2, a third veneer layer 130 comprising hardwood having a third grain orientation D3, and adhesive 200.

As indicated above, the adhesive 200 is an aqueous binder composition and comprises resin, hardener, and water, of which some is present in the resin and some is additional water. The resin comprises polymerizable substance and crosslinking agent. At least 50 weight-% of the polymerizable substance originates from lignin, at least 10 % of the molecules in the resin have a molecular weight of above 10000 Da, at least 10 % of the molecules in the resin have a molecular weight of below 1000 Da, a number-average molar mass Mn of the resin is from 1000 Da to 1600 Da, and a weight-average molar mass Mw of the resin is from 5000 Da to 14000 Da.

As detailed below, preferably the adhesive 200 has been made such that a content of the additional water in the adhesive 200 is from 10 weight % to 25 weight % (in proportion to the total mass of the adhesive, as conventional). Thus, a water content of the adhesive 200 may be in the range of from 40 % to 65 % (which takes into account also the water present in the resin). It has been found that the adhesive with this water content often has a viscosity such that the adhesive 200 flows well into the roughness and/or lathe checks of the surfaces of the veneer layers in hot-pressing. Suitable viscosity values are detailed below. In addition to affecting viscosity, the water of the adhesive affect bonding with wooden veneer layers. In particular, the wood material of the veneer layers comprise hydroxyl (OH) groups, which typically form bonds with molecules of the adhesive. Moisturizing the wooden veneers by the water of the adhesive affects positively the bonding strength, possible because sufficient moisturizing of the veneers reduces surface tension between the veneer and the adhesive and in this way enables the molecules at the interface to become sufficiently close to each other.

Preferably, the polymerizable substance comprises lignin and at least one of phenol, cresol, and resorcinol. More preferably, the polymerizable substance comprises lignin and phenol. More preferably, at least 90 wt% of the polymerizable substance is constituted by lignin and phenol. Preferably, the polymerizable substance comprises lignin that originates from a Kraft process (i.e. Kraft lignin). Preferably, the polymerizable substance comprises lignin that originates from a Kraft process and at least one of phenol, cresol, and resorcinol. More preferably, the polymerizable substance comprises Kraft lignin and phenol. All the material that originates from lignin may originate from Kraft lignin. Preferably, the crosslinking agent is an aldehyde, such as formaldehyde, paraformaldehyde or a combination thereof.

Typically, a material that originates from lignin, particularly from lignin obtainable from a Kraft process, comprises sulphur. Thus, use of Kraft lignin within the adhesive 200 can be determined from the sulphur content of the resin or adhesive. To this end, the sulphur content of the resin can be determined before mixing the adhesive 200; whereas the sulphur content of the adhesive 200 can be measured after mixing, and the sulphur content of the hardened adhesive can be measured e.g. from a plywood panel 100 by sanding off a sample of hardened adhesive therefrom. In general, the amount of sulphur can be measured e.g. by taking a sample (from the resin or adhesive or panel), burning it to ash, and analyzing the content of the ash. Such a method is commonly referred to as a SEM-EDS, an acronym for scanning electron microscopy (SEM) - energy dispersive spectroscopy (EDS). After the SEM-EDS analysis is carried out, one can determine the ratio of elements that are as heavy or heavier than sodium.

In one embodiment of the method the ash obtained from the resin contains at least 1 weight-% of sulphur, preferably at least 2 weight-% of sulphur, and more preferably at least 3 weight-% of sulphur. In one embodiment of the method the ash of the resin contains 1 - 20 weight-% of sulphur, preferably 2 - 10 weight-% of sulphur. Correspondingly, when the adhesive 200 is hardened, also the hardened adhesive may comprise sulphur. However, because of the hardener of the adhesive 200, the sulphur content of the hardened adhesive may be less. Thus, in an embodiment of the plywood panel, the hardened adhesive contains sulphur. In an embodiment, the plywood panel 100 comprises such hardened adhesive that, after burning the hardened adhesive to ash, the ash of the hardened adhesive contains at least 0.25 weight-% of sulphur, preferably at least 1 weight-% of sulphur, and more preferably at least 1.5 weight-% of sulphur. The sulphur content of the ash of the hardened adhesive can be analysed by SEM-EDS as indicated above. Naturally, also the whole plywood panel 100 can be burnt to ashes and a sulphur content thereof may be determined. The plywood panel 100 or the hardened adhesive thereof need not to be burnt before the SEM-EDS analysis. Thus, a sulphur content can be analysed by SEM-EDS from a sample of plywood panel or from a sample of hardened adhesive.

As for more preferable properties of the adhesive 200, the following is noted: Preferably, the number-average molar mass Mn of the resin is from 1100 Da to 1500 Da. Preferably, the weight-average molar mass Mw of the resin is from 6000 Da to 12000 Da. Preferably, at least 15 % of the molecules in the resin have a molecular weight of below 1000 Da. Preferably, at least 15 % of the molecules in the resin have a molecular weight of above 10000 Da. Most preferably, the adhesive has all these features. In an embodiment, at least 18 % of the molecules in the resin have a molecular weight of above 10000 Da.

As for the hardener, it is beneficial that the different veneer layers become bonded to each other to some extent also before hot-pressing the stack 300. To this end, it has been found that starch improves bonding of the veneer layers before hot-pressing. Thus, in an embodiment, the adhesive 200 comprises hardener that comprises starch. Also starch may have a heterogeneous size distribution. Therefore, presence of starch in the adhesive 200 may improve the low-temperature properties of the adhesive 200 following similar principles as discussed above for lignin. However, while lignin is, in general, part of the resin of the adhesive 200, starch may be added as a hardener, when mixing the adhesive 200.

The method comprises applying some of the adhesive 200 on at least one surface of the third veneer layer 130. Some of the adhesive 200 may be applied on two opposite surfaces of some (e.g. every second) of the intermediate veneer layers 130, 140, 150, whereby no adhesive needs to be applied on the outermost veneer layers 110, 120. In the alternative, some of the adhesive 200 may be applied on only one side of all the intermediate veneer layers 130, 140, 150, and on only one side of only one of the outermost veneer layers 110, 120. In these ways, the surfaces 112, 122 (see Fig. 1) remain free from the adhesive 200.

In case a large number of structural layers not comprising wood is used, it may suffice that adhesive 200 is applied only onto surfaces of such structural layers.

The method comprises arranging the veneer layers 110, 120, 130 to a stack 300 such that
- the third veneer layer 130 is arranged in between the first veneer layer 110 and the second veneer layer 120 in the direction of thickness tp of the plywood panel 100 (i.e. in a direction of thickness of the stack 300),
- some of the adhesive 200 is arranged both (a) in between the first 110 and the third 130 veneer layer and (b) in between the second 120 and the third 130 veneer layer, and
- the first grain orientation D1 forms an angle α13 with the third grain orientation D3, the angle α13 being from 60 to 120 degrees.

Such a stack 300 is shown in Fig. 5. Grain orientations of the veneer layers 110, 130, 140, 150, 120 are shown using the same convention as in Figs. 3a and 4a to 4h. In order to harden the adhesive 200 and to form a solid plywood panel 100, the method comprises pressing the stack 300 for a period of time Δt with a pressure p and at a temperature T. Such pressing is commonly referred to as hot-pressing. The stack 300 may be pressed by using a first pressing surface 310 and a second pressing surface 320.

As a result of the hot-pressing, the adhesive 200 hardens and joins the veneer layers to each other. The hardening of the adhesive joins also other layers to the veneer layers, if such other layers are used. Thus, the veneer layers (110, 120, 130) of a finished plywood panel 100, have been attached to each other with the adhesive 200, optionally via other layers. Moreover, the plywood panel 100 thus manufactured comprises hardened adhesive in between the veneer layers 110, 120, 130. However, for clarity, adhesive 200 is shown in Figs. 1 and 2. Properties of the hardened adhesive are different from properties of the adhesive 200 before hardening. However, by analysing the hardened adhesive of a finished (i.e. manufactured) plywood panel 100, it is possible to determine, whether or not the adhesive 200 has been used to attach the veneer layers (110, 120, 130) to each other.

The temperature T, pressure p, and duration Δt of the hot-pressing are interrelated, and may be further related to the thickness tp of the panel and the amount of adhesive 200 used. For example, the adhesive 200 hardens more rapidly at a high temperature than at a low temperature. Moreover, a thick layer of adhesive 200 requires longer hot-pressing time than a thin layer. It has been found that the aforementioned adhesive hardens to form layers of hardened adhesive suitable for use in cryogenic applications in particular, when the hot pressing temperature T is from 110 °C to 190 °C. More preferably, the hot-pressing temperature T is from 120 °C to 150 °C. The temperature herein refers to the temperature of the pressing surfaces 310, 320. The air in between the surfaces need not have such a temperature, since the heat is conducted from the surfaces 310, 320 into the stack 300. However, typically also the environment near the stack heat to the aforementioned temperature during hot pressing, even if the stack 300 is arranged in a large factory having room temperature at least at most locations.

At such a temperature T, a suitable duration for the period of time Δt (i.e. duration of the hot-pressing) is typically from 3 minutes to 60 minutes; more typically from 3 minutes to 15 minutes. Preferably the duration is from 5 to 10 minutes. However, as indicated above, the precise duration may depend on the temperature T and the thickness tp of the panel 100 or stack 300 may affect the duration. A thick panel 100 or stack 300 may require a longer period of time than a thin panel. As s rule of thumb, a duration of from half to two minutes per each millimetre of thickness may be suitable. The stack may be under a pressure p that is at least a minimum pressure pₘᵢₙ and at most a maximum pressure pₘₐₓ (i.e. pₘᵢₙ ≤ p ≤ pₘₐₓ) for the aforementioned time.

Moreover, as for the pressure p, the pressure may vary during hot-pressing. Typically, the pressure p reaches a maximum pressure pₘₐₓ and is gradually decreased thereafter. The pressure p may be decreased step-wise or continuously. When the panel 100 is released from hot-pressing, the pressure p decreases to zero. However, when actually pressing the stack 300 and/or the panel 100, the pressure p may be at least the minimum pressure pₘᵢₙ. It has been found that the maximum pressure pₘₐₓ, is preferably at most 3.5 MPa and more preferably at most 2.0 MPa. This ensures that the veneers do not break in the hot pressing. Breaking would significantly reduce the load-bearing capability of the plywood panel 100. However, to achieve suitable pressing of the adhesive 200 into the surfaces of the veneers, the maximum pressure pₘₐₓ is at least 1.2 MPa; more preferably at least 1.5 MPa. Thus, the maximum pressure pₘₐₓ may be from 1.2 MPa to 3.5 MPa, and more preferably from 1.5 MPa to 2.0 MPa. The pressure p refers to a force as divided by a cross-sectional area of the stack 300. The cross-sectional area is an area of a cross-section having a normal to the direction of thickness tp of the plywood panel 100, which is unidirectional with a direction of thickness of the stack 300. Thus, a cross-sectional area of the stack 300 equals a cross-sectional area of the plywood panel 100. It seems that such a pressure (in particular pₘₐₓ) is suitably high for pressing some of the adhesive 200 into a rough surface of a the veneers 130, 140, 150, i.e. into the grains and/or lathe checks of the veneers. Moreover, it seems that such a pressure (in particular pₘₐₓ) is suitably low for not breaking the internal structure of the veneers by the hot-pressing. Both these factors have an effect on the mechanical properties of the plywood panel 100. The term pressure p here refers to an overpressure, i.e. a force per area above the atmospheric pressure, such as a force per area, wherein the force acts via a pressure plate having the pressing surface 310, 320 (see Fig. 5). As for the minimum pressure pₘᵢₙ, pₘᵢₙ may be e.g. at least 0.1 MPa or at least 0.2 MPa.

The adhesive 200 is applied onto surface or surfaces of at least the intermediate veneer layer(s) as described above. As for the suitable amount of adhesive, preferably the adhesive is applied in such a way that from 100 to 200 of the adhesive 200 is applied to an interspace between two neighbouring layers. Preferably the adhesive is applied in such a way that from 125 g/m² to 170 g/m² of the adhesive 200 is applied to an interspace between two neighbouring layers. Preferably, from 100 g/m² to 200 or from 125 g/m² to 170 g/m² of the adhesive 200 is applied to each one of the interspaces between two neighbouring layers. If only veneer layers 110, 120, 130, 140, 150 and adhesive 200 are used, as detailed in context of the panel 100, from 100 g/m² to 200 g/m² or from 125 g/m² to 170 g/m² of the adhesive 200 is applied to an interspace between two neighbouring veneer layers. This area-specific amount refers to mass per cross-sectional area of the stack 300, i.e. an area of a largest planar surface of the neighbouring layers forming the interspace. Thus, the aforementioned amount of the adhesive 200 is arranged in between each neighbouring two veneer layers before said pressing. As an example, in Fig. 5a, the aforementioned amount of adhesive is present in between the veneer layers 110 and 130; in between the veneer layers 130 and 140; in between the veneer layers 140 and 150; and in between the veneer layers 150 and 120. The adhesive 200 is applied in an even manner. Thus, preferably the aforementioned area-specific amount applies to each part of the interspace in between two neighbouring veneer layers. Such an amount has been found to by suitably high to bond the veneer layers together, and yet suitably low for not to form a thick brittle hardened adhesive layer. In general, thin layers may be bendable, even if a thick layer of the same material was brittle. Moreover, as indicated above, such an amount results in a suitably thick adhesive layer.

In case other material layers are applied within the panel, e.g. by replacing one or more of the intermediate veneer layers by a strengthening layer (e.g. a glass fibre layer or a carbon fibre layer), some of the adhesive 200 may be applied also to such interspaces that are formed on both sides of the strengthening layer(s). Moreover, if a strengthening layer is used as a covering for the panel 100, the strengthening layer may be attached to an outermost veneer layer (110, 120) using the adhesive 200.

In addition, it has been found that the aforementioned amount is particularly suitable for use in such a panel, in which the thicknesses of the veneer layers are from 1.0 mm to 3.0 mm, such as from 1.0 mm to 2.0 mm, and the veneer layers comprise hardwood. Typically, when forming the stack 300 of the veneer layers 110, 120, 130, each veneer layer is equally thick. Moreover, the thickness corresponds to the thickness tbv of Fig. 2. In other words, typically, the veneers are not compressed in the hot pressing in such a way that they would become thinner. However, after hot pressing, the surface veneer layers 110, 120 may be sanded, whereby the thicknesses tsv1 and tsv2 of the panel 100 may be less than the thickness of the surface veneer before said sanding. These thicknesses have been discussed also in connection with the plywood panel 100, of which surfaces 112, 122 may have been sanded. Sanding is beneficial also from the point of view of handling the thickness tp of the panel 100. Sanding can be used to fine-tune the thickness tp. However, preferably the outermost veneer layers 110, 120 (i.e. surface veneer layers, if the panel is not coated), have a reasonable thickness as detailed above. Therefore, in an embodiment, the panel 100 is sanded in such a way that only less than a half of the wooden material of the outermost veneer layers 110, 120 is sanded. Thus, more than a half of the material remains in the panel. In case all the veneer layers are equally thick before sanding, a thickness tsv1, tsv2 of a surface veneer layer 110, 120 is more than half of a thickness tbv of an intermediate veneer layer 130.

Moreover, how the adhesive 200 adheres to the veneers 110, 120, 130, may depend on the moisture content of the veneers 110, 120, 130 at a time just before the adhesive 200 is applied or at the time of applying the adhesive 200. For application of the adhesive, a suitable moisture content for the veneers 110, 120, 130 has been found to be from 2 % to 15 %; preferably from 3 % to 12 %, wherein the moisture content is calculated as weight in proportion to dry weight of the veneer layers. It has been found the adhesive 200 will not likely penetrate sufficiently to the veneer layers 110, 120, 130 otherwise. Thus, an embodiment of the method comprises drying the veneer layers 110, 120, 130. An preferable embodiment of the method comprises drying the veneer layers 110, 120, 130 to a moisture content from 2 % to 15 %, preferably to a moisture content from 3 % to 12 %. Herein the moisture content refers to the content of moisture in proportion to dry matter only.

Furthermore, how the adhesive 200 adheres to the veneer layers 110, 120, 130, may depend on the viscosity of the adhesive 200 and on the water content of the adhesive 200. The viscosity of the adhesive 200 depends largely on the water content of the adhesive 200. As indicated above, the adhesive 200 comprises hardener, additional water, and resin. It has been found that a proper viscosity of the adhesive 200 is achieved, when the content of the additional water in the adhesive 200 is from 13 weight % to 23 weight % (in proportion to the total mass of the adhesive, as conventional) and/or the water content of the adhesive 200 is from 40 % to 65 %. It has been found that a viscosity of the adhesive 200 with this water content is suitable for applying the adhesive 200 onto veneer layers and for the adhesive 200 to flow into the roughness of the surfaces of the veneer layers in hot-pressing. A viscosity of the applied adhesive 200 may be from 15 seconds to 60 seconds at a temperature 23 °C as measured with a Ford cup test. Preferably, the viscosity of the applied adhesive 200 is from 25 seconds to 45 seconds at a temperature 23 °C as measured with a Ford cup test. The Ford Cup test is described in the standard ISO 2431 (1993-02-15). The aforementioned values relate to the orifice size of 6 mm of the flow cup. In particular, the aforementioned values relate to the orifice size of 6 mm of the flow cup in the test, wherein the temperature is 23 °C. Moreover, preferably, when applying some of the adhesive 200 on at least one surface of the third veneer layer 130 or another layer, a viscosity of the adhesive 200 is from 15 seconds to 60 seconds, such as from 25 s to 45 s, as measured with a Ford cup test using a flow cup with an orifice of size of 6 mm as described in the standard ISO 2431 (1993-02-15). When the adhesive 200 hardens, some of the dry matter of the adhesive 200 cross-links and forms water. This water, and the water of the adhesive 200 is evaporated from the panel 100 or stack 300 during hot-pressing. Therefore, the panel 100 comprises a smaller amount of hardened adhesive than the stack 300 comprises the adhesive 200.

By the method, a plywood panel 100 is produced. Thus, an embodiment relates to a plywood panel 100 that has been manufactured by the aforementioned method.

As indicated above, a manufacturer of the panel may indicate to a customer of the suitability of the plywood panel 100 for use at a low temperature and/or in a cryogenic application, such as suitability for use at temperature of less than minus 50 °C; such as suitability for use as support for container 410 containing liquefied natural gas (LNG) or liquefied petroleum gas (LPG). The container 410 may be part of a cargo containment systems (CCS), e.g. it may be on a ship 400. Therefore, an embodiment of the method for manufacturing the plywood panel 100 comprises indicating that the plywood panel 100 is suitable for use at a temperature of less than minus 50 °C and/or in a cryogenic application. For example, an embodiment comprises indicating that the plywood panel 100 is suitable for use at a temperature of less than minus 50 °C. For example, an embodiment comprises indicating that the plywood panel 100 is suitable for use in a cargo containment systems, e.g. a ship 400, configured to transport liquefied natural gas. The suitability may be indicated in multiple ways as indicated in Figs. 7a to 7e and discussed above.

When manufacturing a plywood panel 100, it has been found that the use of raw materials can be improved (i.e. made more efficient) by carefully designing, which veneers are used for intermediate veneer layers 130, 140, 150 and which ones are used as outermost veneer layers 110, 120. In general, while an intermediate layer 130 may be made up from several veneers 131, 132, 133 (see Figs. 3a to 3d), the outermost veneer layers 110, 120 typically comprise only one veneer. However, e.g. knots may be covered with pieces of wood.

In particular, it has been found that veneers of high quality can be used as a outermost veneer layers 110, 120, i.e. a veneer forming a main surface 112, 122 of the plywood panel 100. Correspondingly, it has been found that veneers of lesser quality can be used in intermediate veneer layers.

The term quality refers to multiple features of a veneer of a veneer layer 110, 120, 130. Applicable quality factors can be found from e.g. the standards ISO 2426-1 (2000-12-01), ISO 2426-2 (2000-12-01), and ISO 2426-3 (2000-12-01). ISO 2426-2 applies for veneers of hardwood, while ISO 2426-3 applies for veneers of softwood. Since the plywood panel 100 according to the present invention comprises at least three veneer layers 110, 120, 130 comprising hardwood, at least the standard ISO 2426-2 is applicable.

An embodiment of the method comprises determining that a quality of the third veneer layer 130 is less than a quality of the first veneer layer 110 and determining that a quality of the third veneer layer 130 is less than a quality of the second veneer layer 120. As indicated above, the method comprises arranging the third veneer layer 130 in between the first veneer layer 110 and the second veneer layer 120. The quality of the individual veneers (110, 120, 130) is directly observable when manufacturing the plywood panel. Moreover, the quality of an intermediate veneer layer 130 can be determined from a plywood panel 100 e.g. by sanding off the outermost veneer layers.

As indicated above, such a plywood panel is particularly suitable for use as structural material at a low temperature and/or in a cryogenic application. Therefore, embodiments of the invention relate to a use of the plywood panel 100 at a temperature of less than minus 50 °C. Examples of such a use include a use, wherein the plywood panel 100 is used to support a container 410 containing liquefied gas, such as liquefied natural gas (LNG) or liquefied petroleum gas (LPG). Referring to Fig. 6, such a container 410 may be arranged on a ship 400. Such a container 410 may be also arranged in some other cargo containment system (CCS), such as a LNG CCS.

In particular, the plywood panel 100 is suitable for use as structural material in a LNG tanker. Therefore, an application of the invention is a ship 400 (see Fig. 6). Such a ship 400 comprises the plywood panel 100 as disclosed above. Such a ship 400 may comprise also other plywood panels 100a, 100b, 100c, 100d, 100e, 100f, 100g suitable for use in a LNG CCS. In addition, the ship 400 comprises a container 410 arranged to contain liquefied natural gas (LNG). In the ship 400, the plywood panel 100 supports the container 410. Typically, the container 410 is made from a thin steel plate (thickness from 0.5 mm to 1.0 mm), and the shape of the container 410 conforms with the shape of the support made from the plywood panels (100, 100a to 100g). In addition, the support surrounds the container 410 in order to thermally insulate the container 410 from environment.

### References:

[1] Jeong-Hyeon Kim, Doo-Hwan Park, Chi-Seung Lee, Kwang-Jun Park, Jae-Myung Lee: "Effects of cryogenic thermal cycle and immersion on the mechanical characteristics of phenolrticle-resin bonded plywood", Cryogenics 72 (2015) 90-102
[2] Jeong-Hyeon Kima, Sung-Woong Choib, Doo-Hwan Parka, Seong-Bo Parkc, Seul-Kee Kima, Kwang-Jun Parkd, Jae-Myung Leea: "Effects of cryogenic temperature on the mechanical and failure characteristics of melamine-urea-formaldehyde adhesive plywood", Cryogenics 91 (2018) 36-46

## Claims

1. A plywood panel (100) for use at a temperature of less than -50 °C, the plywood panel (100) having a length (Ip), a width (wp), and a thickness (tp), wherein the thickness (tp) is less than the smaller of the length (Ip) and the width (wp), the plywood panel (100) comprising
- a first veneer layer (110) comprising hardwood having a first grain orientation (D1),
- a second veneer layer (120) comprising hardwood having a second grain orientation (D2), and
- a third veneer layer (130) comprising hardwood having a third grain orientation (D3), wherein
- the third veneer layer (130) is arranged in between the first veneer layer (110) and the second veneer layer (120) in the direction of the thickness (tp) of the plywood panel (100),
- the first grain orientation (D1) forms an angle (α13) with the third grain orientation (D3), the angle (α13) being from 60 to 120 degrees, and
- the veneer layers (110, 120, 130) have been attached to each other with adhesive (200) comprising resin that
• comprises polymerizable substance and crosslinking agent, wherein
• at least 50 weight-% of the polymerizable substance originates from lignin,
• at least 10 % of the molecules in the resin have a molecular weight of above 10000 Da,
• at least 10 % of the molecules in the resin have a molecular weight of below 1000 Da,
• a number-average molar mass of the resin is from 1000 Da to 1600 Da, and
• a weight-average molar mass of the resin is from 5000 Da to 14000 Da.

2. The plywood panel of claim 1, comprising
- hardened adhesive in an interspace between two neighbouring layers, wherein
- the hardened adhesive comprises sulphur.

3. The plywood panel of claim 1 or 2, wherein
- a thickness (ta) of an adhesive layer in between two neighbouring layers is less than 0.25 mm, such as from 0.01 mm to 0.25 mm;
preferably
- a thickness (ta) of an adhesive layer in between two neighbouring veneer layers is less than 0.25 mm, such as from 0.01 mm to 0.25 mm; and/or
- a thickness (ta) of each adhesive layer between two neighbouring layers and between the first veneer layer (110) and the second layer (120) is less than 0.25 mm, such as from 0.01 mm to 0.25 mm.

4. The plywood panel of any of the claims 1 to 3, comprising a further veneer layer (140) or further veneer layers (140, 150, 160) arranged in between the first veneer layer (110) and the second veneer layer (120), wherein
- the further veneer layer(s) comprise(s) wood,
- a first number (N1) of the veneer layers (110, 120, 130, 140, 150, 160) of the plywood panel (100) are oriented in the first grain orientation (D1),
- a second number (N2) of the veneer layers (110, 120, 130, 140, 150, 160) of the plywood panel (100) are oriented in a grain orientation that is perpendicular to the first grain orientation (D1), and
- a sum of the first number (N1) and the second number (N2) equals the number (N) of veneer layers (110, 120, 130, 140, 150, 160) of the plywood panel (100); and
- a difference (N1-N2) between the first number (N1) and the second number (N2) is at most two and at least zero;
preferably
- all the veneer layers (110, 120, 130, 140, 150, 160) that comprise wood comprise hardwood, such as one of ash, aspen, basswood, birch, cherry, hickory, mahogany, maple, oak, poplar, lauan, teak, rosewood, okumé, and meranti; preferably birch or beech;
for example,
[A]
- a number (N) of veneer layers (110, 120, 130, 140, 150, 160) of the plywood panel (100) is expressible as 2M+1, wherein M is an integer number, and
- the first number (N1) exceeds the second number (N2) by one (N1=N2+1) or
[B]
- a number (N) of veneer layers (110, 120, 130, 140, 150, 160) of the plywood panel (100) is expressible as 2M, wherein M is an integer number, and
- the first number (N1) equals the second number (N2; N1=N2) or the first number (N1) exceeds the second number (N2) by two (N1=N2+2).

5. The plywood panel of the claim 4, wherein
- the veneer layer(s) (130, 140, 150, 160) of the plywood panel (100) that are arranged in between the first veneer layer (110) and the second veneer layer (120) are intermediate veneer layers, whereby
- each intermediate veneer layer has a first neighbouring veneer layer and a second neighbouring veneer layer, wherein
- a third number (N3) of the intermediate veneer layers are such intermediate veneer layers that
• a grain direction of the intermediate veneer layer in question is perpendicular to a grain direction of the first neighbouring veneer layer of the intermediate veneer layer in question and
• the grain direction of the intermediate veneer layer in question is perpendicular to a grain direction of the second neighbouring veneer layer of the intermediate veneer layer in question; and
- the third number (N3) is less than the number (N) of veneer layers by two or four (N3=N-2 or N3=N-4);
preferably
[A]
- a number (N) of veneer layers (110, 120, 130, 140, 150, 160) of the plywood panel (100) is expressible as 2M+1, wherein M is an integer number, and
- the third number (N3) is less than the number (N) of veneer layers by two (N3=N-2) or
[B]
- a number (N) of veneer layers (110, 120, 130, 140, 150, 160) of the plywood panel (100) is expressible as 2M, wherein M is an integer number, and
- the third number (N3) is less than the number (N) of veneer layers by four (N3=N-4).

6. The plywood panel (100) of any of the claims 1 to 5, wherein
- intermediate veneer layers (130, 140, 150) comprising wood are arranged in between the first veneer layer (110) and the second veneer layer (120),
- a thickness (tbv) of each one of the intermediate veneer layers (130, 140, 150) is from 1.0 mm to 3.0 mm, and
- a thickness (tp) of the plywood panel (100) is from 4 mm to 95 mm; preferably,
- each intermediate veneer layer (130, 140, 150) comprises hardwood.

7. The plywood panel (100) of any of the claims 1 to 6, wherein
- a thickness (tsv1) of the first veneer layer (110) is more than half of a thickness (tbv) of the third veneer layer (130) and
- a thickness (tsv2) of the second veneer layer (120) is more than half of the thickness (tbv) of the third veneer layer (130).

8. A method for manufacturing a plywood panel (100) suitable for use at a temperature of less than -50 °C, the method comprising
- arranging available
• a first veneer layer (110) comprising hardwood having a first grain orientation (D1),
• a second veneer layer (120) comprising hardwood having a second grain orientation (D2),
• a third veneer layer (130) comprising hardwood having a third grain orientation (D3), and
• adhesive (200) that
o comprises resin comprising polymerizable substance and crosslinking agent, wherein
o at least 50 weight-% of the polymerizable substance originates from lignin,
o at least 10 % of the molecules in the resin have a molecular weight of above 10000 Da,
o at least 10 % of the molecules in the resin have a molecular weight of below 1000 Da,
o a number-average molar mass of the resin is from 1000 Da to 1600 Da, and
o a weight-average molar mass of the resin is from 5000 Da to 14000 Da;
the method comprising
- arranging the veneer layers (110, 120, 130) and the adhesive (200) to a stack (300) such that
• the third veneer layer (130) is arranged in between the first veneer layer (110) and the second veneer layer (120) in the direction of thickness (tp) of the plywood panel (100),
• some of the adhesive (200) is arranged both
o in between the first (110) and the third (130) veneer layer and
o in between the second (120) and the third (130) veneer layer, and
• the first grain orientation (D1) forms an angle (α13) with the third grain orientation (D3), the angle (α13) being from 60 to 120 degrees, and
- hot-pressing the stack (300).

9. The method of claim 8, wherein the adhesive (200) is applied in such a way that from 100 g/m² to 200 g/m² of the adhesive (200) is arranged in between two neighbouring layers before said hot-pressing;
preferably
- from 100 g/m² to 200 g/m² of the adhesive (200) is arranged in between two neighbouring veneer layers before said pressing and/or
- from 100 g/m² to 200 g/m² of the adhesive (200) is arranged in between each neighbouring two layers before said pressing.

10. The method of claims 8 or 9, wherein
- a dry-matter content of the adhesive (200) is from 35 wt% to 60 wt%, and/or
- a viscosity of the adhesive (200) is from 15 seconds to 60 seconds at a temperature 23 °C as measured with a Ford cup test using a flow cup with an orifice of size of 6 mm as described in the standard ISO 2431 (1993-02-15); preferably,
- when applying some of the adhesive (200), a dry-matter content of the applied adhesive (200) is from 35 wt% to 60 wt% and a viscosity of the applied adhesive (200) is from 15 seconds to 60 seconds as measured with a Ford cup test using a flow cup with an orifice of size of 6 mm as described in the standard ISO 2431 (1993-02-15).

11. The method of any of the claims 8 to 10, comprising after hot-pressing the stack (300)
- sanding the first veneer layer (110) such that less than half of the material of the first veneer layer (110) is removed by the sanding,
preferably the method comprises also
- sanding the second veneer layer (120) such that less than half of the material of the second veneer layer (120) is removed by the sanding.

12. The method of any of the claims 8 to 11, comprising
- indicating that the plywood panel (100) is suitable for use at a temperature of less than minus 50 °C such as in a cryogenic application;
for example
- indicating that the plywood panel (100) is suitable for use in liquefied gas (LPG, LNG) cargo containment system (CCS), such as a storage configured to contain liquefied petroleum gas (LPG) or liquefied natural gas (LNG), such as a ship (400) configured to transport liquefied petroleum gas (LPG) or liquefied natural gas (LNG).

13. The method of any of the claims 8 to 11, comprising
- indicating that the plywood panel (100) is suitable for use at a temperature of less than minus 150 °C such as in liquefied natural gas (LNG) cargo containment system (CCS).

14. The plywood panel (100) or the method of any of the preceding claims, wherein
- the first veneer layer (110) has a first quality as determined according to the standard ISO 2426-2,
- the second veneer layer (120) has a second quality as determined according to the standard ISO 2426-2, and
- the third veneer layer (130) has a third quality as determined according to the standard ISO 2426-2; wherein
- the first quality is higher than the third quality;
preferably also
- the second quality is higher than the third quality.

15. The plywood panel (100) of any of the claims 1 to 7 or 14, wherein
- the plywood panel (100) only comprises layers of hardened adhesive and intermediate veneer layers in between the first veneer layer (110) and the second veneer layer (120), wherein the layers of hardened adhesive have been made by gluing layers of the plywood panel (100) to each other with the adhesive (200);
preferably,
- the plywood panel (100) consists of layers of hardened adhesive and veneer layers.

16. The plywood panel (100) of any of the claims 1 to 7 or 14 or 15, wherein, when
- a first group of test specimens and a second group of test specimens are cut from the plywood panel (100),
- a first longitudinal bending strength and a first transversal bending strength are determined from the first group of test specimens according to the standard EN 310 (1993) after the specimens of the first group of test specimens have been thermally treated in a liquefied gas immersion treatment, and
- a second longitudinal bending strength and a second transversal bending strength are determined from the second group of test specimens according to the standard EN 310 (1993) without thermally treating the specimens of the second group of test specimens,
- the first longitudinal bending strength is at least 97 % of the second longitudinal bending strength and the first transversal bending strength is at least 97 % of the second transversal bending strength, wherein
- the liquefied gas immersion treatment comprises immersing the specimens of the first group of test specimens to a liquefied natural gas (LNG) at a pressure of 1 atm for a period of 15 days.

17. The plywood panel (100) of any of the claims 1 to 7 or 14 to 16, comprising
- at least one of
• an information carrier (590) carrying first information and
• a database (580) comprising second information, wherein
- the first information and/or the second information is indicative of the plywood panel (100) being suitable for use at a temperature of less than -50 °C such as in a cryogenic application;
in an embodiment
- the first and/or second information is indicative of the plywood panel (100) being suitable for use in cargo containment system (CCS) configured to contain liquefied gas (LPG, LNG), such as a system comprising a container (410) arranged to contain liquefied petroleum gas (LPG) or liquefied natural gas (LNG).

18. The plywood panel (100) of any of the claims 1 to 7 or 14 to 16, comprising
- at least one of
• an information carrier (590) carrying first information and
• a database (580) comprising second information, wherein
- the first information and/or the second information is indicative of the plywood panel (100) being suitable for use at a temperature of less than -150 °C such as for use in cargo containment system (CCS) configured to contain liquefied natural gas (LNG).

19. An arrangement (500) comprising
- the plywood panel (100) of any of the claims 1 to 7 or 14 to 16 and
- at least one of
• an information carrier (590) carrying first information and
• a database (580) comprising second information, wherein
- the first information and/or the second information is indicative of the plywood panel (100) being suitable for use at a temperature of less than -50 °C such as in a cryogenic application;
preferably,
- the first information and/or the second information is indicative of the plywood panel (100) being suitable for use at a temperature of less than -150 °C such as for use in cargo containment system (CCS) configured to contain liquefied natural gas (LNG).

20. Use of the plywood panel (100) of any of the claims 1 to 7 or 14 to 18 at a temperature of less than minus 50 °C; such as
- a use, wherein the plywood panel (100) is used to support a container (410) containing liquefied petroleum gas (LPG) or liquefied natural gas (LNG).

21. Use of the plywood panel (100) of any of the claims 1 to 7 or 14 to 18 at a temperature of less than minus 150 °C; such as
- a use, wherein the plywood panel (100) is used to support a container (410) containing liquefied natural gas (LNG).

22. A cargo containment system (CCS), such as a ship (400), comprising
- the plywood panel (100) of any of the claims 1 to 7 or 14 to 18 and
- a container (410) arranged to contain liquefied gas (LPG, LNG), wherein
- the plywood panel (100) supports the container (410).

## Patentansprüche

1. Sperrholzplatte (100) zur Verwendung bei einer Temperatur von weniger als -50°C, wobei die Sperrholzplatte (100) eine Länge (1p), eine Breite (wp) und eine Dicke (tp) aufweist, wobei die Dicke (tp) kleiner als die kleinere der Länge (lp) und der Breite (wp) ist, wobei die Sperrholzplatte (100) Folgendes umfasst
- eine erste Furnierschicht (110), die Hartholz mit einer ersten Faserorientierung (D1) umfasst,
- eine zweite Furnierschicht (120), die Hartholz mit einer zweiten Faserorientierung (D2) umfasst, und
- eine dritte Furnierschicht (130), die Hartholz mit einer dritten Faserorientierung (D3) umfasst, wobei
- die dritte Furnierschicht (130) in Richtung der Dicke (tp) der Sperrholzplatte (100) zwischen der ersten Furnierschicht (110) und der zweiten Furnierschicht (120) angeordnet ist,
- die erste Faserorientierung (D1) mit der dritten Faserorientierung (D3) einen Winkel (α13) bildet, wobei der Winkel (α13) 60 bis 120 Grad beträgt, und
- die Furnierschichten (110, 120, 130) mit einem Klebstoff (200) aneinander befestigt wurden, der ein Harz umfasst, das
o eine polymerisierbare Substanz und ein Vernetzungsmittel umfasst, wobei
o mindestens 50 Gew.-% der polymerisierbaren Substanz aus Lignin stammen,
o mindestens 10 % der Moleküle im Harz ein Molekulargewicht von über 10000 Da haben,
o mindestens 10 % der Moleküle im Harz ein Molekulargewicht von weniger als 1000 Da haben,
o eine zahlenmittlere Molmasse des Harzes von 1000 Da bis 1600 Da beträgt, und
o eine gewichtsmittlere Molmasse des Harzes von 5000 Da bis 14000 Da beträgt.

2. Sperrholzplatte nach Anspruch 1, umfassend
- ausgehärteten Klebstoff in einem Zwischenraum zwischen zwei benachbarten Schichten, wobei
- der ausgehärtete Klebstoff Schwefel enthält.

3. Sperrholzplatte nach Anspruch 1 oder 2, wobei
- eine Dicke (ta) einer Klebeschicht zwischen zwei benachbarten Schichten kleiner als 0,25 mm ist, wie z.B. von 0,01 mm bis 0,25 mm;
vorzugsweise
- eine Dicke (ta) einer Klebeschicht zwischen zwei benachbarten Furnierschichten kleiner als 0,25 mm ist, wie z. B. von 0,01 mm bis 0,25 mm; und/oder
- eine Dicke (ta) jeder Klebeschicht zwischen zwei benachbarten Schichten und zwischen der ersten Furnierschicht (110) und der zweiten Schicht (120) kleiner als 0,25 mm ist, wie beispielsweise von 0,01 mm bis 0,25 mm.

4. Sperrholzplatte nach einem der Ansprüche 1 bis 3, umfassend eine weitere Furnierschicht (140) oder weitere Furnierschichten (140, 150, 160), die zwischen der ersten Furnierschicht (110) und der zweiten Furnierschicht (120) angeordnet sind, wobei
- die weitere(n) Furnierschicht(en) Holz umfassen,
- eine erste Anzahl (N1) der Furnierschichten (110, 120, 130, 140, 150, 160) der Sperrholzplatte (100) in der ersten Faserorientierung (D1) orientiert sind,
- eine zweite Anzahl (N2) der Furnierschichten (110, 120, 130, 140, 150, 160) der Sperrholzplatte (100) in einer Faserorientierung orientiert sind, die senkrecht zur ersten Faserorientierung (D1) ist, und
- eine Summe der ersten Anzahl (N1) und der zweiten Anzahl (N2) gleich der Anzahl (N) von Furnierschichten (110, 120, 130, 140, 150, 160) der Sperrholzplatte (100) ist; und
- eine Differenz (N1-N2) zwischen der ersten Anzahl (N1) und der zweiten Anzahl (N2) höchstens zwei und mindestens null ist;
vorzugsweise
- alle Furnierschichten (110, 120, 130, 140, 150, 160), die Holz umfassen, Hartholz umfassen, wie zum Beispiel Esche, Espe, Linde, Birke, Kirsche, Hickory, Mahagoni, Ahorn, Eiche, Pappel, Lauan, Teak, Palisander, Okume und Meranti; vorzugsweise Birke oder Buche;
zum Beispiel,
[A]
- eine Anzahl (N) von Furnierschichten (110, 120, 130, 140, 150, 160) der Sperrholzplatte (100) als 2M+1 ausdrückbar ist, wobei M eine ganze Zahl ist, und
- die erste Anzahl (N1) die zweite Anzahl (N2) um eins übersteigt (N1=N2+1) oder
[B]
- eine Anzahl (N) von Furnierschichten (110, 120, 130, 140, 150, 160) der Sperrholzplatte (100) als 2M ausdrückbar ist, wobei M eine ganze Zahl ist, und
- die erste Anzahl (N1) gleich der zweiten Anzahl (N2; N1=N2) ist oder die erste Anzahl (N1) die zweite Anzahl (N2) um zwei übersteigt (N1=N2+2).

5. Sperrholzplatte nach Anspruch 4, wobei
- die zwischen der ersten Furnierschicht (110) und der zweiten Furnierschicht (120) angeordnete(n) Furnierschicht (en) (130, 140, 150, 160) der Sperrholzplatte (100) Zwischenfurnierschichten sind, wobei
- jede Zwischenfurnierschicht eine erste benachbarte Furnierschicht und eine zweite benachbarte Furnierschicht aufweist, wobei
- eine dritte Anzahl (N3) der Zwischenfurnierschichten solche Zwischenfurnierschichten sind, die
o eine Faserrichtung der betreffenden Zwischenfurnierschicht senkrecht zu einer Faserrichtung der ersten benachbarten Furnierschicht der betreffenden Zwischenfurnierschicht ist, und
o die Faserrichtung der betreffenden Zwischenfurnierschicht senkrecht zu einer Faserrichtung der zweiten benachbarten Furnierschicht der betreffenden Zwischenfurnierschicht ist; und
- die dritte Anzahl (N3) um zwei oder vier kleiner als die Anzahl (N) der Furnierschicht (N3=N-2 oder N3=N-4) ist;
vorzugsweise
[A]
- eine Anzahl (N) von Furnierschichten (110, 120, 130, 140, 150, 160) der Sperrholzplatte (100) als 2M+1 ausdrückbar ist, wobei M eine ganze Zahl ist, und
- die dritte Anzahl (N3) um zwei kleiner als die Anzahl (N) der Furnierschichten (N3=N-2) ist, oder
[B]
- eine Anzahl (N) von Furnierschichten (110, 120, 130, 140, 150, 160) der Sperrholzplatte (100) als 2M ausdrückbar ist, wobei M eine ganze Zahl ist, und
- die dritte Anzahl (N3) um vier kleiner als die Anzahl (N) der Furnierschichten (N3=N-4) ist.

6. Sperrholzplatte (100) nach einem der Ansprüche 1 bis 5, wobei
- ZwischenFurnierschichten (130, 140, 150) aus Holz zwischen der ersten Furnierschicht (110) und der zweiten Furnierschicht (120) angeordnet sind,
- eine Dicke (tbv) jeder der Zwischenfurnierschichten (130, 140, 150) 1,0 mm bis 3,0 mm beträgt, und
- eine Dicke (tp) der Sperrholzplatte (100) 4 mm bis 95 mm beträgt;
vorzugsweise,
- jede Zwischenfurnierschicht (130, 140, 150) Hartholz umfasst.

7. Sperrholzplatte (100) nach einem der Ansprüche 1 bis 6, wobei
- eine Dicke (tsv1) der ersten Furnierschicht (110) größer als die Hälfte einer Dicke (tbv) der dritten Furnierschicht (130) ist, und
- eine Dicke (tsv2) der zweiten Furnierschicht (120) größer als die Hälfte der Dicke (tbv) der dritten Furnierschicht (130) ist.

8. Verfahren zum Herstellen einer Sperrholzplatte (100), die zur Verwendung bei einer Temperatur von weniger als -50°C geeignet ist, wobei das Verfahren Folgendes umfasst
- Bereitstellen
o einer ersten Furnierschicht (110), die Hartholz mit einer ersten Faserorientierung (D1) umfasst,
o einer zweiten Furnierschicht (120), die Hartholz mit einer zweiten Faserorientierung (D2) umfasst,
o einer dritten Furnierschicht (130), die Hartholz mit einer dritten Faserorientierung (D3) umfasst, und
o Klebstoff (200), der
o ein Harz umfasst, das eine polymerisierbare Substanz und ein Vernetzungsmittel umfasst, wobei
o mindestens 50 Gew.-% der polymerisierbaren Substanz aus Lignin stammen,
o mindestens 10 % der Moleküle im Harz ein Molekulargewicht von über 10000 Da haben,
o mindestens 10 % der Moleküle im Harz ein Molekulargewicht von weniger als 1000 Da haben,
o eine zahlenmittlere Molmasse des Harzes von 1000 Da bis 1600 Da beträgt, und
o eine gewichtsmittlere Molmasse des Harzes von 5000 Da bis 14000 Da beträgt;
wobei das Verfahren Folgendes umfasst
- Anordnen der Furnierschichten (110, 120, 130) und des Klebstoffs (200) zu einem Stapel (300), so dass
o die dritte Furnierschicht (130) in Dickenrichtung (tp) der Sperrholzplatte (100) zwischen der ersten Furnierschicht (110) und der zweiten Furnierschicht (120) angeordnet ist,
o ein Teil des Klebstoffs (200) wie folgt angeordnet ist
o zwischen der ersten (110) und der dritten (130) Furnierschicht und
o zwischen der zweiten (120) und der dritten (130) Furnierschicht, und
o die erste Faserorientierung (D1) mit der dritten Faserorientierung (D3) einen Winkel (α13) bildet, wobei der Winkel (α13) 60 bis 120 Grad beträgt, und
- Heißpressen des Stapels (300).

9. Verfahren nach Anspruch 8, wobei der Klebstoff (200) so aufgebracht wird, dass vor dem Heißpressen 100 g/m² bis 200 g/m² des Klebstoffs (200) zwischen zwei benachbarten Schichten angeordnet werden;
vorzugsweise
- 100 g/m² bis 200 g/m² des Klebstoffs (200) vor dem Pressen zwischen zwei benachbarten Furnierschichten angeordnet werden, und/oder
- 100 g/m² bis 200 g/m² des Klebstoffs (200) vor dem Pressen zwischen jeweils benachbarten zwei Schichten angeordnet werden.

10. Verfahren nach Anspruch 8 oder 9, wobei
- ein Trockensubstanzgehalt des Klebstoffs (200) 35 Gew.-% bis 60 Gew.-% beträgt, und/oder
- eine Viskosität des Klebstoffs (200) von 15 Sekunden bis 60 Sekunden bei einer Temperatur von 23 °C beträgt, gemessen mit einem Ford-Bechertest unter Verwendung eines Auslaufbechers mit einer Öffnungsgröße von 6 mm, wie in der Norm ISO 2431 (1993-02-15) beschrieben; vorzugsweise,
- wenn etwas Klebstoff (200) aufgetragen wird, ein Trockensubstanzgehalt des aufgetragenen Klebstoffs (200) 35 Gew.-% bis 60 Gew.-% beträgt und eine Viskosität des aufgetragenen Klebstoffs (200) 15 Sekunden bis 60 Sekunden beträgt, gemessen mit einem Ford-Bechertest unter Verwendung eines Auslaufbechers mit einer Öffnungsgröße von 6 mm, wie in der Norm ISO 2431 (1993-02-15) beschrieben.

11. Verfahren nach einem der Ansprüche 8 bis 10, umfassend nach dem Heißpressen des Stapels ( 300 )
- Schleifen der ersten Furnierschicht (110), so dass weniger als die Hälfte des Materials der ersten Furnierschicht (110) durch das Schleifen entfernt wird, vorzugsweise das Verfahren auch Folgendes umfasst
- Schleifen der zweiten Furnierschicht (120), so dass weniger als die Hälfte des Materials der zweiten Furnierschicht (120) durch das Schleifen entfernt wird.

12. Verfahren nach einem der Ansprüche 8 bis 11, umfassend
- Angeben, dass die Sperrholzplatte (100) zur Verwendung bei einer Temperatur von weniger als minus 50°C geeignet ist, wie beispielsweise in einer kryogenen Anwendung;
zum Beispiel
- Angeben, dass die Sperrholzplatte (100) für die Verwendung in einem Flüssiggas-(LPG, LNG)-Ladungsbehältersystem (CCS) geeignet ist, wie etwa einem Speicher, der konfiguriert ist, um Flüssiggas (LPG) oder Flüssigerdgas (LNG) zu enthalten, wie ein Schiff (400), das zum Transport von verflüssigtem Erdölgas (LPG) oder verflüssigtem Erdgas (LNG) konfiguriert ist.

13. Verfahren nach einem der Ansprüche 8 bis 11, umfassend
- Angeben, dass die Sperrholzplatte ( 100 ) für die Verwendung bei einer Temperatur von weniger als minus 150 °C geeignet ist, wie beispielsweise in einem Frachtbehältersystem (CCS) für verflüssigtes Erdgas (LNG).

14. Sperrholzplatte (100) oder Verfahren nach einem der vorhergehenden Ansprüche, wobei
- die erste Furnierschicht (110) eine erste Qualität aufweist, wie sie gemäß der Norm ISO 2426-2 bestimmt wird,
- die zweite Furnierschicht (120) eine zweite Qualität aufweist, wie sie gemäß der Norm ISO 2426-2 bestimmt wird, und
- die dritte Furnierschicht (130) eine dritte Qualität aufweist, wie sie gemäß der Norm ISO 2426-2 bestimmt wird; wobei
- die erste Qualität höher als die dritte Qualität ist; vorzugsweise auch
- die zweite Qualität höher als die dritte Qualität ist.

15. Sperrholzplatte (100) nach einem der Ansprüche 1 bis 7 oder 14, wobei
- die Sperrholzplatte (100) zwischen der ersten Furnierschicht (110) und der zweiten Furnierschicht (120) nur Schichten aus ausgehärtetem Klebstoff und Zwischenfurnierschichten aufweist, wobei die Schichten aus gehärtetem Klebstoff hergestellt worden sind, indem Schichten der Sperrholzplatte (100) mit dem Klebstoff (200) aneinander geklebt wurden;
vorzugsweise,
- die Sperrholzplatte (100) aus ausgehärteten Leimschichten und Furnierschichten besteht.

16. Sperrholzplatte (100) nach einem der Ansprüche 1 bis 7 oder 14 oder 15, wobei, wenn
- aus der Sperrholzplatte (100) eine erste Gruppe von Proben und eine zweite Gruppe von Proben ausgeschnitten werden,
- eine erste Längsbiegefestigkeit und eine erste Querbiegefestigkeit an der ersten Gruppe von Proben gemäß der Norm EN 310 (1993) bestimmt werden, nachdem die Proben der ersten Gruppe von Proben in einer Flüssiggas-Tauchbehandlung thermisch behandelt worden sind, und
- eine zweite Längsbiegefestigkeit und eine zweite Querbiegefestigkeit aus der zweiten Gruppe von Proben gemäß der Norm EN 310 (1993) ohne thermische Behandlung der Proben der zweiten Gruppe von Proben bestimmt werden,
- die erste Längsbiegefestigkeit mindestens 97 % der zweiten Längsbiegefestigkeit beträgt und die erste Querbiegefestigkeit mindestens 97 % der zweiten Querbiegefestigkeit beträgt, wobei
- die Flüssiggas-Eintauchbehandlung das Eintauchen der Proben der ersten Gruppe von Testproben in Flüssigerdgas (LNG) bei einem Druck von 1 atm für einen Zeitraum von 15 Tagen umfasst.

17. Sperrholzplatte (100) nach einem der Ansprüche 1 bis 7 oder 14 bis 16, umfassend
- mindestens eines von
o einem Informationsträger (590), der erste Informationen trägt und
o einer Datenbank (580), die zweite Informationen umfasst, wobei
- die erste Information und/oder die zweite Information darauf hinweist, dass die Sperrholzplatte (100) zur Verwendung bei einer Temperatur von weniger als -50°C geeignet ist, wie beispielsweise in einer kryogenen Anwendung;
in einer Ausführungsform
- die erste und/oder zweite Information darauf hinweist, dass die Sperrholzplatte (100) zur Verwendung in einem Frachtbehältersystem (CCS) geeignet ist, das so konfiguriert ist, dass es verflüssigtes Gas (LPG, LNG) enthält, wie ein System, das einen Behälter (410) umfasst, der so angeordnet ist, dass er verflüssigtes Erdölgas (LPG) oder verflüssigtes Erdgas (LNG) enthält.

18. Sperrholzplatte (100) nach einem der Ansprüche 1 bis 7 oder 14 bis 16, umfassend
- mindestens eines von
o einem Informationsträger (590), der erste Informationen trägt und
o einer Datenbank (580), die zweite Informationen umfasst, wobei
- die erste Information und/oder die zweite Information darauf hinweist, dass die Sperrholzplatte (100) zur Verwendung bei einer Temperatur von weniger als -150°C geeignet ist, wie zum Beispiel zur Verwendung in einem Frachtbehältersystem (CCS), das so konfiguriert ist, dass es verflüssigtes Erdgas (LNG) enthält.

19. Anordnung (500), umfassend
- die Sperrholzplatte (100) nach einem der Ansprüche 1 bis 7 oder 14 bis 16 und
- mindestens eines von
o einem Informationsträger (590), der erste Informationen trägt und
o einer Datenbank (580), die zweite Informationen umfasst, wobei
- die erste Information und/oder die zweite Information darauf hinweist, dass die Sperrholzplatte (100) zur Verwendung bei einer Temperatur von weniger als -50°C geeignet ist, wie beispielsweise in einer kryogenen Anwendung;
vorzugsweise,
- die erste Information und/oder die zweite Information darauf hinweist, dass die Sperrholzplatte (100) zur Verwendung bei einer Temperatur von weniger als -150°C geeignet ist, wie zum Beispiel zur Verwendung in einem Frachtbehältersystem (CCS), das so konfiguriert ist, dass es verflüssigtes Erdgas (LNG) enthält.

20. Verwendung der Sperrholzplatte (100) nach einem der Ansprüche 1 bis 7 oder 14 bis 18 bei einer Temperatur von weniger als minus 50°C; wie zum Beispiel
- eine Verwendung, bei der die Sperrholzplatte (100) verwendet wird, um einen Behälter (410) zu tragen, der verflüssigtes Erdölgas (LPG) oder verflüssigtes Erdgas (LNG) enthält.

21. Verwendung der Sperrholzplatte (100) nach einem der Ansprüche 1 bis 7 oder 14 bis 18 bei einer Temperatur von weniger als minus 150°C; wie zum Beispiel
- eine Verwendung, bei der die Sperrholzplatte (100) verwendet wird, um einen Behälter (410) zu tragen, der verflüssigtes Erdgas (LNG) enthält.

22. Frachtbehältersystem (CCS), wie beispielsweise ein Schiff (400), umfassend
- die Sperrholzplatte (100) nach einem der Ansprüche 1 bis 7 oder 14 bis 18 und
- einen Behälter (410), der angeordnet ist, um verflüssigtes Gas (LPG, LNG) zu enthalten, wobei
- die Sperrholzplatte (100) den Behälter (410) trägt.

## Revendications

1. Panneau de contreplaqué (100) destiné à être utilisé à une température inférieure à -50°C, le panneau de contreplaqué (100) ayant une longueur (lp), une largeur (wp) et une épaisseur (tp), dans lequel l'épaisseur (tp) est inférieure à la plus faible valeur parmi la longueur (lp) et la largeur (wp), le panneau de contreplaqué (100) comprenant
- une première couche de placage (110) comprenant du bois dur ayant une première orientation de grain (D1),
- une deuxième couche de placage (120) comprenant du bois dur ayant une deuxième orientation de grain (D2), et
- une troisième couche de placage (130) comprenant du bois dur ayant une troisième orientation de grain (D3), dans lequel
- la troisième couche de placage (130) est agencée entre la première couche de placage (110) et la deuxième couche de placage (120) dans la direction de l'épaisseur (tp) du panneau de contreplaqué (100),
- la première orientation de grain (D1) forme un angle (α13) avec la troisième orientation de grain (D3), l'angle (α13) étant compris entre 60 et 120 degrés, et
- les couches de placage (110, 120, 130) ont été fixées les unes aux autres avec un adhésif (200) comprenant une résine qui
• comprend une substance polymérisable et un agent de réticulation, dans lequel
• au moins 50 % en poids de la substance polymérisable proviennent de la lignine,
• au moins 10 % des molécules de la résine ont un poids moléculaire supérieur à 10 000 Da,
• au moins 10 % des molécules de la résine ont un poids moléculaire inférieur à 1 000 Da,
• une masse molaire moyenne en nombre de la résine est comprise entre 1 000 Da et 1 600 Da, et
• une masse molaire moyenne en poids de la résine est comprise entre 5 000 Da et 14 000 Da.

2. Panneau de contreplaqué selon la revendication 1, comprenant
- un adhésif durci dans un espace intermédiaire entre deux couches voisines, dans lequel
- l'adhésif durci comprend du soufre.

3. Panneau de contreplaqué selon la revendication 1 ou 2, dans lequel
- une épaisseur (ta) d'une couche adhésive entre deux couches voisines est inférieure à 0,25 mm, par exemple entre 0,01 mm et 0,25 mm ;
de préférence
- une épaisseur (ta) d'une couche adhésive entre deux couches de placage voisines est inférieure à 0,25 mm, par exemple entre 0,01 mm et 0,25 mm ; et/ou
- une épaisseur (ta) de chaque couche adhésive entre deux couches voisines et entre la première couche de placage (110) et la deuxième couche (120) est inférieure à 0,25 mm, par exemple entre 0,01 mm et 0,25 mm.

4. Panneau de contreplaqué selon l'une quelconque des revendications 1 à 3, comprenant une autre couche de placage (140) ou d'autres couches de placage (140, 150, 160) agencées entre la première couche de placage (110) et la deuxième couche de placage (120), dans lequel
- la ou les autres couches de placage comprennent du bois,
- un premier nombre (N1) des couches de placage (110, 120, 130, 140, 150, 160) du panneau de contreplaqué (100) sont orientées dans la première orientation de grain (D1),
- un deuxième nombre (N2) des couches de placage (110, 120, 130, 140, 150, 160) du panneau de contreplaqué (100) sont orientées dans une orientation de grain qui est perpendiculaire à la première orientation de grain (D1), et
- une somme du premier nombre (N1) et du deuxième nombre (N2) est égale au nombre (N) de couches de placage (110, 120, 130, 140, 150, 160) du panneau de contreplaqué (100) ; et
- une différence (N1-N2) entre le premier nombre (N1) et le deuxième nombre (N2) est au maximum de deux et d'au moins zéro ;
de préférence
- toutes les couches de placage (110, 120, 130, 140, 150, 160) qui comprennent du bois comprennent du bois dur, tel que du frêne, du tremble, du tilleul, du bouleau, du cerisier, du noyer, de l'acajou, de l'érable, du chêne, du peuplier, du lauan, du teck, du palissandre, de l'okoumé et du meranti ; de préférence du bouleau ou du hêtre ;
par exemple,
[A]
- un nombre (N) de couches de placage (110, 120, 130, 140, 150, 160) du panneau de contreplaqué (100) est exprimable par 2M+1, où M est un nombre entier, et
- le premier nombre (N1) dépasse le deuxième nombre (N2) de un (N1 = N2+1) ou
[B]
- un nombre (N) de couches de placage (110, 120, 130, 140, 150, 160) du panneau de contreplaqué (100) est exprimable par 2M, où M est un nombre entier, et
- le premier nombre (N1) est égal au deuxième nombre (N2 ; N1 = N2) ou le premier nombre (N1) dépasse le deuxième nombre (N2) de deux (N1 = N2+2).

5. Panneau de contreplaqué selon la revendication 4, dans lequel
- la ou les couches de placage (130, 140, 150, 160) du panneau de contreplaqué (100) qui sont agencées entre la première couche de placage (110) et la deuxième couche de placage (120) sont des couches de placage intermédiaires, de sorte que
- chaque couche de placage intermédiaire a une première couche de placage voisine et une seconde couche de placage voisine, dans lequel
- un troisième nombre (N3) des couches de placage intermédiaires sont des couches de placage intermédiaires telles que
• une direction de grain de la couche de placage intermédiaire en question est perpendiculaire à une direction de grain de la première couche de placage voisine de la couche de placage intermédiaire en question et
• la direction de grain de la couche de placage intermédiaire en question est perpendiculaire à une direction de grain de la seconde couche de placage voisine de la couche de placage intermédiaire en question ; et
- le troisième nombre (N3) est inférieur au nombre (N) de couches de placage de deux ou quatre (N3 = N-2 ou N3 = N-4) ;
de préférence
[A]
- un nombre (N) de couches de placage (110, 120, 130, 140, 150, 160) du panneau de contreplaqué (100) est exprimable par 2M+1, où M est un nombre entier, et
- le troisième nombre (N3) est inférieur au nombre (N) de couches de placage de deux (N3 = N-2) ou
[B]
- un nombre (N) de couches de placage (110, 120, 130, 140, 150, 160) du panneau de contreplaqué (100) est exprimable par 2M, où M est un nombre entier, et
- le troisième nombre (N3) est inférieur au nombre (N) de couches de placage de quatre (N3 = N-4).

6. Panneau de contreplaqué (100) selon l'une quelconque des revendications 1 à 5, dans lequel
- des couches de placage intermédiaires (130, 140, 150) comprenant du bois sont agencées entre la première couche de placage (110) et la deuxième couche de placage (120),
- une épaisseur (tbv) de chacune des couches de placage intermédiaires (130, 140, 150) est comprise entre 1,0 mm et 3,0 mm, et
- une épaisseur (tp) du panneau de contreplaqué (100) est comprise entre 4 mm et 95 mm ; de préférence,
- chaque couche de placage intermédiaire (130, 140, 150) comprend du bois dur.

7. Panneau de contreplaqué (100) selon l'une quelconque des revendications 1 à 6, dans lequel
- une épaisseur (tsv1) de la première couche de placage (110) est supérieure à la moitié d'une épaisseur (tbv) de la troisième couche de placage (130) et
- une épaisseur (tsv2) de la deuxième couche de placage (120) est supérieure à la moitié de l'épaisseur (tbv) de la troisième couche de placage (130).

8. Procédé de fabrication d'un panneau de contreplaqué (100) adapté à une utilisation à une température inférieure à - 50°C, le procédé comprenant
- l'agencement disponible
• une première couche de placage (110) comprenant du bois dur ayant une première orientation de grain (D1),
• une deuxième couche de placage (120) comprenant du bois dur ayant une deuxième orientation de grain (D2),
• une troisième couche de placage (130) comprenant du bois dur ayant une troisième orientation de grain (D3), et
• un adhésif (200) qui
o comprend une résine comprenant une substance polymérisable et un agent de réticulation, dans lequel
o au moins 50 % en poids de la substance polymérisable proviennent de la lignine,
o au moins 10 % des molécules de la résine ont un poids moléculaire supérieur à 10 000 Da,
o au moins 10 % des molécules de la résine ont un poids moléculaire inférieur à 1 000 Da,
o une masse molaire moyenne en nombre de la résine est comprise entre 1 000 Da et 1 600 Da, et
o une masse molaire moyenne en poids de la résine est comprise entre 5 000 Da et 14 000 Da ;
le procédé comprenant
- l'agencement des couches de placage (110, 120, 130) et de l'adhésif (200) en un empilement (300) de sorte que
• la troisième couche de placage (130) est agencée entre la première couche de placage (110) et la deuxième couche de placage (120) dans la direction de l'épaisseur (tp) du panneau de contreplaqué (100),
• une certaine quantité de l'adhésif (200) est agencée à la fois
o entre la première (110) et la troisième (130) couches de placage et
o entre la deuxième (120) et la troisième (130) couches de placage, et
• la première orientation de grain (D1) forme un angle (α13) avec la troisième orientation de grain (D3), l'angle (α13) étant compris entre 60 et 120 degrés, et
- le pressage à chaud de l'empilement (300).

9. Procédé selon la revendication 8, dans lequel l'adhésif (200) est appliqué de telle manière que l'on dispose de 100 g/m² à 200 g/m² de l'adhésif (200) entre deux couches voisines avant ledit pressage à chaud ;
de préférence
- on dispose de 100 g/m² à 200 g/m² de l'adhésif (200) entre deux couches de placage voisines avant ledit pressage et/ou
- on dispose de 100 g/m² à 200 g/m² de l'adhésif (200) entre deux couches voisines avant ledit pressage.

10. Procédé selon la revendication 8 ou 9, dans lequel
- une teneur en matière sèche de l'adhésif (200) est comprise entre 35 % en poids et 60 % en poids, et/ou
- une viscosité de l'adhésif (200) est comprise entre 15 secondes et 60 secondes à une température de 23°C telle que mesurée avec un test de coupe de Ford au moyen d'une coupe consistométrique avec un orifice d'une taille de 6 mm comme cela est décrit dans la norme ISO 2431 (1993-02-15) ; de préférence,
- lors de l'application d'une certaine quantité de l'adhésif (200), une teneur en matière sèche de l'adhésif appliqué (200) est comprise entre 35 % en poids et 60 % en poids et une viscosité de l'adhésif appliqué (200) est comprise entre 15 secondes et 60 secondes comme cela est mesuré avec un test de coupe de Ford au moyen d'une coupe consistométrique avec un orifice d'une taille de 6 mm comme cela est décrit dans la norme ISO 2431 (1993-02-15) .

11. Procédé selon l'une quelconque des revendications 8 à 10 comprenant, après le pressage à chaud de l'empilement (300)
- le ponçage de la première couche de placage (110) de sorte que moins de la moitié du matériau de la première couche de placage (110) est éliminée par le ponçage,
de préférence, le procédé comprend également
- le ponçage de la deuxième couche de placage (120) de sorte que moins de la moitié du matériau de la deuxième couche de placage (120) est éliminée par le ponçage.

12. Procédé selon l'une quelconque des revendications 8 à 11, comprenant
- l'indication que le panneau de contreplaqué (100) est adapté à une utilisation à une température inférieure à moins 50°C comme dans une application cryogénique ;
par exemple
- l'indication que le panneau de contreplaqué (100) est adapté à une utilisation dans un système de stockage de la cargaison (CCS) de gaz liquéfié (GPL, GNL), tel qu'un stockage conçu pour contenir du gaz de pétrole liquéfié (GPL) ou du gaz naturel liquéfié (GNL), tel qu'un navire (400) conçu pour transporter du gaz de pétrole liquéfié (GPL) ou du gaz naturel liquéfié (GNL).

13. Procédé selon l'une quelconque des revendications 8 à 11, comprenant
- l'indication que le panneau de contreplaqué (100) est adapté à une utilisation à une température inférieure à moins 150°C, comme dans un système de stockage de la cargaison (CCS) de gaz naturel liquéfié (GNL).

14. Panneau de contreplaqué (100) ou procédé selon l'une quelconque des revendications précédentes, dans lequel
- la première couche de placage (110) a une première qualité telle que déterminée selon la norme ISO 2426-2,
- la deuxième couche de placage (120) a une deuxième qualité telle que déterminée selon la norme ISO 2426-2, et
- la troisième couche de placage (130) a une troisième qualité telle que déterminée selon la norme ISO 2426-2 ; dans lequel
- la première qualité est supérieure à la troisième qualité ;
de préférence également
- la deuxième qualité est supérieure à la troisième qualité.

15. Panneau de contreplaqué (100) selon l'une quelconque des revendications 1 à 7 ou 14, dans lequel
- le panneau de contreplaqué (100) comprend uniquement des couches d'adhésif durci et des couches de placage intermédiaires entre la première couche de placage (110) et la deuxième couche de placage (120), dans lequel les couches d'adhésif durci ont été réalisées en collant des couches du panneau de contreplaqué (100) entre elles au moyen de l'adhésif (200) ;
de préférence,
- le panneau de contreplaqué (100) est constitué de couches d'adhésif durci et de couches de placage.

16. Panneau de contreplaqué (100) selon l'une quelconque des revendications 1 à 7 ou 14 ou 15, dans lequel, lorsque
- un premier groupe d'échantillons d'essai et un second groupe d'échantillons d'essai sont découpés dans le panneau de contreplaqué (100),
- une première résistance à la flexion longitudinale et une première résistance à la flexion transversale sont déterminées à partir du premier groupe d'échantillons d'essai selon la norme EN 310 (1993) après que les échantillons du premier groupe d'échantillons d'essai ont été traités thermiquement dans un traitement par immersion dans un gaz liquéfié, et
- une seconde résistance à la flexion longitudinale et une seconde résistance à la flexion transversale sont déterminées à partir du second groupe d'échantillons d'essai selon la norme EN 310 (1993) sans traitement thermique des échantillons du second groupe d'échantillons d'essai,
- la première résistance à la flexion longitudinale est au moins 97 % égale à la seconde résistance à la flexion longitudinale et la première résistance à la flexion transversale est au moins 97 % égale à la seconde résistance à la flexion transversale, dans lequel
- le traitement par immersion dans un gaz liquéfié comprend l'immersion des échantillons du premier groupe d'échantillons d'essai dans un gaz naturel liquéfié (GNL) à une pression de 1 atm pendant une période de 15 jours.

17. Panneau de contreplaqué (100) selon l'une quelconque des revendications 1 à 7 ou 14 à 16, comprenant
- au moins l'un parmi
• un support d'informations (590) portant des premières informations et
• une base de données (580) comprenant des secondes informations, dans lequel
- les premières informations et/ou les secondes informations indiquent que le panneau de contreplaqué (100) est adapté à une utilisation à une température inférieure à - 50°C comme dans une application cryogénique ;
dans un mode de réalisation
- les premières et/ou les secondes informations indiquent que le panneau de contreplaqué (100) est adapté à une utilisation dans un système de stockage de la cargaison (CCS) conçu pour contenir du gaz liquéfié (GPL, GNL), tel qu'un système comprenant un conteneur (410) agencé pour contenir du gaz de pétrole liquéfié (GPL) ou du gaz naturel liquéfié (GNL).

18. Panneau de contreplaqué (100) selon l'une quelconque des revendications 1 à 7 ou 14 à 16, comprenant
- au moins l'un parmi
• un support d'informations (590) portant des premières informations et
• une base de données (580) comprenant des secondes informations, dans lequel
- les premières informations et/ou les secondes informations indiquent que le panneau de contreplaqué (100) est adapté à une utilisation à une température inférieure à - 150°C, comme par exemple pour une utilisation dans un système de stockage de la cargaison (CCS) conçu pour contenir du gaz naturel liquéfié (GNL).

19. Agencement (500) comprenant
- le panneau de contreplaqué (100) selon l'une quelconque des revendications 1 à 7 ou 14 à 16 et
- au moins l'un parmi
• un support d'informations (590) portant des premières informations et
• une base de données (580) comprenant des secondes informations, dans lequel
- les premières informations et/ou les secondes informations indiquent que le panneau de contreplaqué (100) est adapté à une utilisation à une température inférieure à -50°C comme dans une application cryogénique ;
de préférence,
- les premières informations et/ou les secondes informations indiquent que le panneau de contreplaqué (100) est adapté à une utilisation à une température inférieure à -150°C, comme par exemple pour une utilisation dans un système de stockage de la cargaison (CCS) conçu pour contenir du gaz naturel liquéfié (GNL).

20. Utilisation du panneau de contreplaqué (100) selon l'une quelconque des revendications 1 à 7 ou 14 à 18 à une température inférieure à moins 50°C ; comme par exemple
- une utilisation, dans laquelle le panneau de contreplaqué (100) est utilisé pour supporter un conteneur (410) contenant du gaz de pétrole liquéfié (GPL) ou du gaz naturel liquéfié (GNL).

21. Utilisation du panneau de contreplaqué (100) selon l'une quelconque des revendications 1 à 7 ou 14 à 18 à une température inférieure à moins 150°C ; comme par exemple
- une utilisation, dans laquelle le panneau de contreplaqué (100) est utilisé pour supporter un conteneur (410) contenant du gaz naturel liquéfié (GNL).

22. Système de stockage de la cargaison (CCS), tel qu'un navire (400), comprenant
- le panneau de contreplaqué (100) selon l'une quelconque des revendications 1 à 7 ou 14 à 18 et
- un conteneur (410) agencé pour contenir du gaz liquéfié (GPL, GNL), dans lequel
- le panneau de contreplaqué (100) supporte le conteneur (410) .
